# EUROPEAN PATENT APPLICATION

(11) **EP 3 605 250 A1**
(43) Date of publication of application: **05.02.2020**
(21) Application number: 18776209.1
(22) Date of filing: 28.02.2018
(51) Int. Cl.: G05B 19/042, B25J 9/22

(54) **INFORMATION PROCESSING DEVICE AND INFORMATION PROCESSING METHOD, COMPUTER PROGRAM, AND PROGRAM MANUFACTURING METHOD**

(30) Priority: 31.03.2017 JP 2017070634
(71) Applicant: Sony Corporation, Tokyo 108-0075 (JP)
(72) Inventor: NAKAI, Mikio, Tokyo 108-0075 (JP)
(74) Representative: MFG Patentanwälte Meyer-Wildhagen Meggle-Freund Gerhard PartG mbB
(86) International application number: PCT/JP2018/007482
(87) International publication number: WO 2018/180148

(57) **Abstract**

Provided is an information processing apparatus that is used for or supports development of an operation control program of a control device having a movable unit.

An information processing apparatus that processes an operation control program including a target value for a movable unit of a control target device includes: a first holding unit that holds a control parameter of the movable unit according to a control method and a characteristic value of the movable unit; a control output unit that calculates an output value of the movable unit according to the target value using the control parameter and the characteristic value held by the first holding unit; and a physical operation unit that causes the control target device to perform a physical action according to the output value of the movable unit calculated.

## Description

### TECHNICAL FIELD

A technology disclosed in the present specification relates to an information processing apparatus and an information processing method, a computer program, and a program manufacturing method that are used for or support development of a control program of a control device having a movable unit.

### BACKGROUND ART

Advances in robotics technology in recent years have been remarkable, and have widely spread in work sites in various industrial fields. A robot includes, for example, a plurality of links and joints connecting the links, and is operated by driving each joint using an actuator for joint driving such as a motor.

For example, methods of editing operation of robots and characters of animations using key frames are known (see, for example, Patent Document 1). Specifically, it is possible to edit operation intuitively and in an easy-to-understand manner, such as "move the joint from Y degrees to Z in X seconds" by designating a data set including a target value such as a position (joint angle) and speed of each movable unit such as a joint in a key frame at the start, end, or the like of operation of a certain section on a graphical user interface (GUI) screen.

However, various physical elements need to be considered when creating operation of various articulated robots. For example, when creating operation of a legged mobile robot such as of biped walking or quadruped walking, physical elements such as a fall of the machine body or a collision with an object (such as an obstacle) on the moving path should be considered. In order to check the created defined operation (also referred to as motion), it is necessary to perform the defined operation on an actual machine or to use a physics engine capable of performing advanced physical operation.

### CITATION LIST

### PATENT DOCUMENT

Patent Document 1: Japanese Patent Application Laid-Open No. 2002-74382

### SUMMARY OF THE INVENTION

### PROBLEMS TO BE SOLVED BY THE INVENTION

An object of a technology disclosed in the present specification is to provide an information processing apparatus and an information processing method, a computer program, and a program manufacturing method that are used for or support development of a control program of a control device having a movable unit.

### SOLUTIONS TO PROBLEMS

A technology disclosed in the present specification is made in consideration of the above-mentioned problem, and a first aspect thereof is an information processing apparatus that processes a control program including a target value for a movable unit of a control target device, the information processing apparatus including:
a first holding unit that holds a control parameter of the movable unit according to a control method and a characteristic value of the movable unit;
a control output unit that calculates an output value of the movable unit according to the target value using the control parameter and the characteristic value held by the first holding unit; and
a physical operation unit that causes the control target device to execute physical action according to the output value of the movable unit calculated.

The control output unit calculates a control input value according to a deviation of the target value and a current value of the movable unit using the control parameter held by the first holding unit, and calculates an output value of the movable unit according to the characteristic value held by the first holding unit with respect to the control input value.

Furthermore, the first holding unit holds at least one control parameter of a proportional gain, an integral gain, or a derivative gain according to the control method of the movable unit, and at least one characteristic value of a manufacturer name of a motor that drives the movable unit, model number, mounting angle dimensions, type, shaft type, presence or absence of electromagnetic brake, driver type, rated output, rated rotational speed, maximum rotational speed, maximum input rotational speed, rated torque, instantaneous maximum torque, excitation maximum static torque, speed range, rotor inertia moment, inertia moment, resolution (motor shaft) (P/R), detector (encoder), backlash, reduction ratio, power input voltage, power input frequency, power input rated voltage, speed and position control command, maximum input pulse frequency, or motor unit mass.

Furthermore, the information processing apparatus further includes a second holding unit that holds a characteristic value of the control target device. The second holding unit holds at least one of the weight, the center of gravity, the inertia, the movable range of the joint, or the friction coefficient of each component included in the control target device. Then, the physical operation unit causes the control target device to execute physical action using the characteristic value held by the second holding unit.

Furthermore, a second aspect of a technology disclosed in the present specification is an information processing method for processing a control program including a target value for a movable unit of a control target device, the information processing method including:
a first holding step of holding a control parameter of the movable unit according to a control method and a characteristic value of the movable unit;
a control output step of calculating an output value of the movable unit according to the target value using the control parameter and the characteristic value held by the first holding step; and
a physical operation step of causing the control target device to execute physical action according to the output value of the movable unit calculated.

Furthermore, a third aspect of a technology disclosed in the present specification is a computer program described in a computer readable format so as to execute processing for a control program including a target value for a movable unit of a control target device on a computer, the computer program causing the computer to function as:
a first holding unit that holds a control parameter of the movable unit according to a control method and a characteristic value of the movable unit;
a control output unit that calculates an output value of the movable unit with respect to the target value using the control parameter and the characteristic value held by the first holding unit; and
a physical operation unit that causes the control target device to execute physical action according to the output value of the movable unit calculated.

The computer program according to the third aspect of the technology disclosed herein defines a computer program described in a computer readable format so as to realize predetermined processing on a computer. In other words, by installing the computer program according to the third aspect into a computer, a cooperative action is exhibited on the computer, and a similar effect to the information processing apparatus according to the first aspect can be obtained.

Furthermore, a fourth aspect of a technology disclosed in the present specification is an information processing apparatus that performs processing for controlling a control target device having a movable unit according to a control program, the information processing apparatus including:
a setting unit that sets a control parameter of the movable unit according to the control method, the control parameter being included in the control program, to a controller that drives the movable unit in the control target device; and
an operation control unit that controls driving of the movable unit by the controller according to a target value of the movable unit specified by the control program.

Furthermore, a fifth aspect of the technology disclosed in the present specification is a program manufacturing method for manufacturing a control program for controlling a control target device having a movable unit, the program manufacturing method including:
a control parameter setting step of setting to the control program a control parameter used to cause a controller of the control target device to control the movable unit; and
a target value setting step of setting to the control program a target value to be input to a controller of the control target device to control driving of the movable unit.

### EFFECTS OF THE INVENTION

According to a technology disclosed in the present specification, an information processing apparatus and an information processing method, a computer program, and a program manufacturing method that are used for or support development of a control program of a control device having a movable unit can be provided.

Note that the effects described in the present specification are merely examples, and the effects of the present invention are not limited thereto. Furthermore, in addition to the above effects, the present invention may further exert additional effects.

Still other objects, features, and advantages of the technology disclosed in the present specification will become apparent from a detailed description based on embodiments as described later and accompanying drawings.

### BRIEF DESCRIPTION OF DRAWINGS

Fig. 1 is a diagram schematically showing an example of a development environment of a control program.
Fig. 2 is a diagram illustrating a distributed development environment of a control program via a network.
Fig. 3 is a diagram illustrating a development environment of a control program for developing a robot.
Fig. 4 is a diagram illustrating a development environment of a control program for developing an autonomous vehicle.
Fig. 5 is a diagram illustrating a development environment of a control program for development of an unmanned aerial vehicle (drone).
Fig. 6 is a diagram showing an example of the configuration of the hardware and software architecture mounted on an actual machine of an autonomous operation device 100.
Fig. 7 is a diagram schematically showing a configuration example of an application program.
Fig. 8 is a flowchart showing a processing procedure at the time of installing a program and data of an application program for control of an actual machine on the actual machine.
Fig. 9 is a diagram schematically showing a configuration example of each data file of a behavior plan and defined operation.
Fig. 10 is a flowchart showing a processing procedure of operation of an actual machine of an application program.
Fig. 11 is a flowchart showing a detailed processing procedure for executing defined operation.
Fig. 12 is a diagram schematically showing a functional configuration of a development device 1200 for creating defined operation of the autonomous operation device 100.
Fig. 13 is a diagram showing internal operation of each of a motor control output unit 1220 and a physical operation unit 1230.
Fig. 14 is a diagram showing a control block diagram of a real motor.
Fig. 15 is a flowchart showing a processing procedure for performing on a development tool program of an application program.
Fig. 16 is a flowchart showing a processing procedure for realizing defined operation by a virtual machine, and a processing procedure for performing data correction input through the GUI during processing of the defined operation.
Fig. 17 is a diagram showing a situation where control parameters are changed during the defined operation.
Fig. 18 is a diagram showing a modification of a data format of the defined operation.

### MODE FOR CARRYING OUT THE INVENTION

Hereinafter, embodiments of the technology disclosed in the present specification will be described in detail with reference to the drawings.

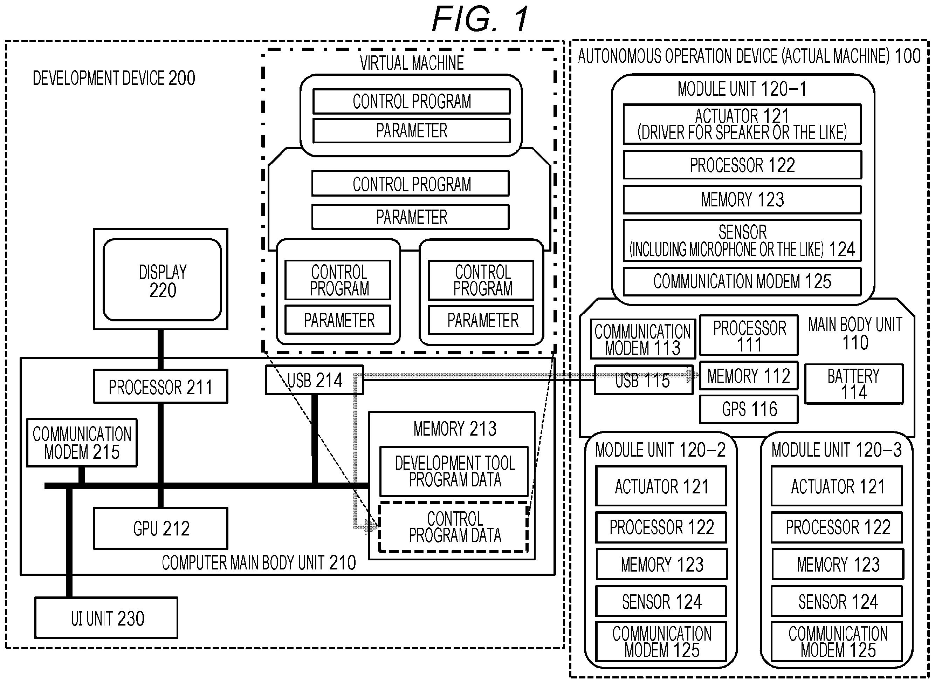

Fig. 1 schematically shows an example of a development environment of a control program. Under the development environment, an autonomous operation device (actual machine) 100 to be developed and a development device 200 that creates a control program in the autonomous operation device 100 are disposed.

Here, the autonomous operation device 100 is a device that controls its own behavior by autonomous or adaptive control, and includes various forms such as a robot, an unmanned aerial vehicle, and an autonomously driving car.

The autonomous operation device 100 includes a main body unit 110 that generally controls the operation of the entire system 100, and a plurality of module units 120-1, 120-2, .... Although only three module units are illustrated in Fig. 1 for simplification, an autonomous operation device including four or more module units, and an autonomous operation device including only two or less module units are also assumed.

One module unit 120 includes an actuator 121, a sensor 124, a processor 122, a memory 123, and a communication modem 125. Note that, although not shown for simplicity, the units 121 to 125 in the module unit 120 are interconnected by an internal bus.

The actuator 121 is, for example, a motor for rotationally driving a joint, or a driver for a speaker. The sensor 124 is a sensor that detects an output state of an actuator such as a joint rotation angle, an angular velocity, or a volume of a speaker, a sensor that detects an external force or other external environment, or the like.

The processor 122 controls operation in the module including drive control (motor controller) of the actuator 121 and recognition processing of detection signals from the sensor 124. The memory 123 is used by the processor 122 to store control information of the actuator 121, a detection value of a sensor, and the like.

The communication modem 125 is hardware for performing mutual communication between the module unit 120 and the main body unit 110 or between the module unit 120 and another module unit, and may be either a wireless modem or a wired modem. For example, the processor 122 receives a command signal of driving or the like of the actuator 121 from the main body unit 110, and transmits detection data by the sensor 124 to the main body unit 110, via the communication modem 125. Furthermore, the module unit 120 can also communicate with an external device such as the development device 200 via the communication modem 125.

The main body unit 110 includes a processor 111, a memory 112, a communication modem 113, a battery 114, a universal serial bus (USB) port 115, and a global positioning system (GPS) 116. Note that, although not shown for simplicity, the units 111 to 116 in the main body unit 110 are interconnected by an internal bus.

The processor 111 centrally controls the operation of the entire autonomous operation device 100 in accordance with a program stored in the memory 112. Furthermore, the battery 114 is a drive power supply of the autonomous operation device 100, and supplies power to the main body unit 110 and each module unit 120.

The communication modem 113 is hardware for performing mutual communication between the main body unit 120 and each module unit 120, and may be either a wireless modem or a wired modem. For example, the processor 111 transmits a command signal of driving or the like of the actuator 121 to each module unit 120, and receives a recognition result based on the detection value of the sensor 124 in each module unit 120, via the communication modem 113. Furthermore, the main body unit 110 can also communicate with an external device such as the development device 200 via the communication modem 113.

The USB port 115 is used to connect an external device to the main body unit 110 using a USB bus (cable). In the present embodiment, it is assumed that the development device 200 is connected to the main body unit 110 using the USB port 115. For example, the control program created on the development device 200 can be installed on the autonomous operation device 100 via the USB port 115. Note that the USB is an example of an interface standard for connecting an external device to the autonomous operation device 100, and may be configured to connect an external device in accordance with another interface standard.

Note that, although not shown, there are a data bus and a control bus that connect the main body unit 110 and hardware such as each module unit.

The development device 200 configured of, for example, a personal computer, and includes a computer main body unit 210, a display 220 such as a liquid crystal panel, and a user interface (UI) unit 230 including a mouse, a keyboard, and the like. Furthermore, the computer main body unit 210 includes a processor 211, a graphic processing unit (GPU) 212, a memory 213, a USB port 214, and a communication modem 215. However, a configuration example in which the function of the GPU 212 is included in the processor 211 can also be considered. Furthermore, the computer main body unit 210 includes hardware components other than those illustrated, and the units are interconnected by a bus.

An operating system (OS) runs on the development device 200. The processor 211 can load a desired application program into the memory 212 and execute the application program under the execution environment provided by the OS.

In the present embodiment, a development tool program for creating a control program for the autonomous operation device 100 is assumed as one of the application programs. The development tool program is developed on the memory 213 of the development device 200 together with data required to execute the program.

The development tool program presents a graphical user interface (GUI) for program development on the screen of the display 220. The program developer can input data and programs via the user interface 230 while checking the contents of the GUI screen. Furthermore, the development tool program includes a compiler related to the created control program, a debugger, a simulation, a function for checking the operation of the control program using 3D graphics animation, or the like, and the developer can issue an instruction on execution of these functions on the GUI screen.

The control program created using the development tool program includes a control program executed on the processor 111 of the main body unit 110 on the actual machine of the autonomous operation device 100 and data such as parameters used by the control program, and a control program for controlling driving of the actuator 121 in the processor 122 of each module unit 120 and data such as parameters used by the control program. The parameters used by the control program include data such as control parameters such as P (proportional control), I (integral control), and D (derivative control) of a motor as an actuator. In the present specification, the program part and data may be collectively referred to as "control program".

The control program created using the development tool program is stored in the memory 213. Furthermore, the control program on the memory 213 can be transferred to the autonomous operation device 100 via the USB port 214. Alternatively, the control program on the memory 213 can be transferred to the module unit 120 in the autonomous operation device 100 via the communication modem 215.

Furthermore, for the control program created on the development device 200 using the development tool program, operation verification and correction of control data and program can be performed using a development tool program or data having a 3D graphics animation function (hereinafter the program for development tool and the data are also collectively referred to as "development tool program"). Generally, this type of development tool program includes a function to generate 3D graphics animation of the actual machine operation of the autonomous operation device 100 according to the control program, and the developer can perform verification of the operation of the control program developed by the developer himself/herself and correction of data and programs in parallel using the 3D graphics animation displayed on the display 220.

In the present embodiment, it is assumed that a development tool program includes a function called a physics engine. The physics engine is a computer program having a function to operate a physical phenomenon on the basis of the physical law of the operation of the real autonomous operation device 100, and considers the physical characteristics of the autonomous operation device 100 and further the realistic external environment to generate operation similar to real and display the result on the display 220. Relative to the actual machine of the autonomous operation device 100, a virtual autonomous operation device 100 that operates in 3D graphics animation space using a physics engine instead of a motor of an actual machine is also referred to as a virtual machine (computer program and data including data for 3D graphics animation).

For example, if the autonomous operation device 100 is a robot, the physics engine, while considering the weight and moment of each link of the robot arm and joints, and the characteristics of actuators for driving joints or the like, calculates the physical action between the virtual physics environment and the virtual machine represented on the development tool program (ground contact with the ground, collision with an obstacle, or the like) on the basis of the physical law in the operation of the control program of a virtual machine created by imitating a robot to calculate the operation of the entire virtual machine as if the actuator of the robot were actually driving, and causes the display 220 to display 3D graphics animation reproducing realistic operation of the robot by a virtual machine.

The virtual machine is a control program and data configured to operate on a development tool program including a physics engine and 3D graphics animation, and is stored in the memory 213. Preferably, in the control program of the virtual machine, the control program and data are modularized in units operating on the processor 122 of each module unit 120 of the actual machine 100. In order to operate the virtual machine as if it were the actual machine 100 on 3D graphics space, the control program of the virtual machine realizes a function corresponding to the operation of the processor (for example, motor controller) 122 of the actual machine as a part of the program. Furthermore, the control program of this virtual machine is programmed so as to invoke a physics engine function that reproduces the operation corresponding to the actuator 121 (for example, motor) of each module unit 120 of the actual machine by 3D graphics animation by using an application programming interface (API) or a function. Moreover, data used in physical calculation in the physics engine (a control parameter set for the actuator, weight of link, inertia, or the like) is stored in the memory 213 together with the control program, is read from the memory 213 along with the execution of the control program, and used in the control program.

Furthermore, the same API or function as that provided by the basic OS operating in the actual machine, that is, the autonomous operation device 100 side, is used as the API or function for issuing an instruction to the program module for realizing the physics engine function, so that the program created by the development tool program can be operated as it is on the OS on the actual machine. Moreover, since the actual physical phenomenon can be reproduced by the physics engine function, the program developed using the development tool program is directly uploaded to the autonomous operation device 100 via the USB port 214 or the like and executed, so that the operation checked by the development tool program can be realized also on the actual machine.

Furthermore, the control program of the autonomous operation device 100 can also be developed by dividing it into module units using the development tool program. Also in this case, the control program can be uploaded to the autonomous operation device 100 in module units. For example, a developer in charge of developing the hardware and control program of only the module unit 120-1 can connect his/her development device 200 to the corresponding module unit 120-1 of the autonomous operation device 100 via the communication modem 215 to upload the created program or data to the memory 123 in the module unit 120-1.

The development of the entire autonomous operation device 100 can be promoted in a distributed development environment by sharing the development of hardware and programs by module units among a plurality of developers or a plurality of development vendors.

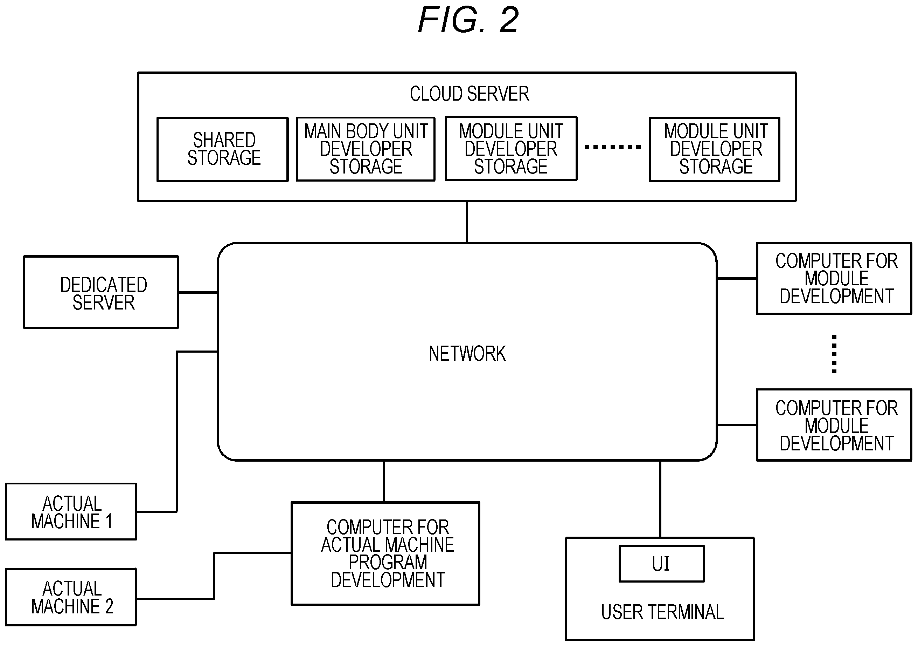

Fig. 2 illustrates a distributed development environment of a control program via a network. In the distributed development environment shown in Fig. 2, development is entrusted to individual developers or development vendors for each module. However, the module in Fig. 2 may also refer to a module of control software of the autonomous operation device 100 in addition to the module unit 120 which is a hardware component of the autonomous operation device 100 shown in Fig. 1.

Each program developer responsible for developing the control program in the main body unit 110 or module unit 120 of the autonomous operation device 100 creates a control program of the main body unit 110 or module unit 120 that he/she is in charge of, using the module development computer. For example, the above-described development tool program is operating on the module development computer. Each module development computer is connected to a network. Then, each program developer may provide a self-developed control program or the like in a shared storage on a cloud server, own dedicated storage (in other words, the main body unit developer storage, the module unit developer storage), or a storage provided in the dedicated server. Furthermore, a control program or the like may be shared by a manager, a developer, a customer, or a user who has an account in a storage such as a server.

A developer in charge or control of control program development for the entire actual machine of the autonomous operation device 100 receives provision of control programs for the main body unit 110 and each module unit 120 via a network. Specifically, the actual machine program development computer used by the developer of the entire actual machine receives each control program by direct communication with a shared storage or developer storage on a cloud server, a dedicated server, or a module development computer of each developer. However, the network receiving the provision of the control program may be configured to be either wired or wireless.

The actual machine program development computer used by the developer of the entire actual machine corresponds to the development device 200 shown in Fig. 1, and includes a function capable of performing operation using a physics engine on the development tool program, and displaying the operation of the virtual machine corresponding to the actual machine by 3D graphics animation. Therefore, the actual machine program development computer can check and verify the operation of the control program of the main body unit 110 and all the module units 120 through the display of 3D graphics animation of a virtual machine using a physics engine function of the development tool program.

Moreover, each control program can be corrected in parallel with the execution of the developed control program on the actual machine program development computer. Therefore, the developer of the entire actual machine and the developer who is in charge of each module unit also efficiently co-develop the control program of the entire actual machine. Furthermore, the control program corrected on the actual machine program development computer can be provided again to the developer in charge of the module unit to have the final program product completed. For example, co-development can be smoothly promoted by managing the control program in module units, such as arranging a storage dedicated to the main body unit and each module unit on a cloud server.

The control program whose operation has been checked and verified (in other words, completed) on the actual machine program development computer used by the developer of the entire actual machine can be directly uploaded from the development device 200 to the autonomous operation device 100 of the actual machine via the USB port 214. Alternatively, the control program for the entire actual machine or each module unit can be uploaded to the actual machine via a wired or wireless network.

Furthermore, a form of uploading a control program from a dedicated server to the actual machine is also assumed. For example, a control program in which a user of an actual machine may log in to a dedicated server using an account he/she has via a user interface (keyboard, mouse, touch panel, or the like) of his/her user terminal, and further select a control program to be downloaded or uploaded to the actual machine to perform downloading or uploading.

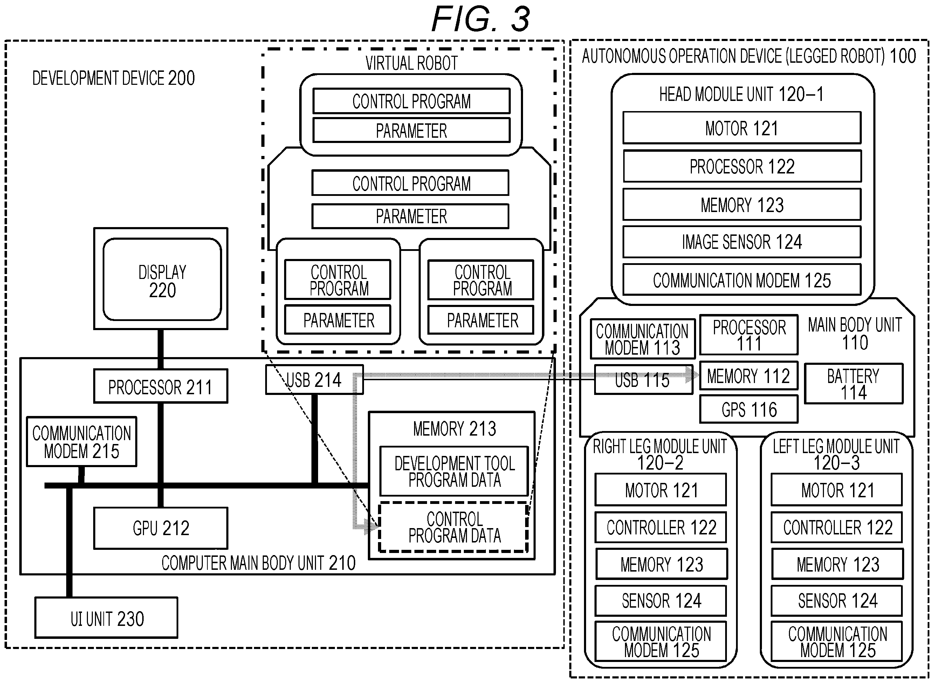

Fig. 3 illustrates a development environment of a control program in a case of developing a legged robot as a specific example of the autonomous operation device 100. Although program development is performed using a single development device 200 in Fig. 3, it is of course possible to use a distributed development environment via a network as shown in Fig. 2.

The legged robot 100 has a main body unit 110 and a module unit 120 corresponding to a head and left and right legs. Although not shown, there are a data bus and a control bus that connect the main body unit 110 and hardware such as each module unit 120 such as a head and left and right legs.

Note that the legged robot 100 may further have a module unit (not shown) such as an upper limb. Furthermore, a modification of the actual machine configuration may be considered in which functions such as processors and memories in at least some of the module units are integrated with the main body unit and controlled by the processor of the main body unit.

The main body unit 110 includes a processor 111, a memory 112, a wireless or wired communication modem 113, a battery 114, a USB port 115, and a GPS 116.

The left and right leg module units 120-2 and 120-3 include a motor 121 for driving a joint (or walking) such as a hip joint, a knee joint, or an ankle as an actuator, and include a motor controller 122 that controls the driving of the motor as a processor. Furthermore, the left and right leg module units 120-2 and 120-3 include, as the sensor 124, a torque sensor that detects an external force generated on the output side of the motor 121, an encoder that detects a rotation angle on the output side of the motor 121, a ground sensor in the sole portion, and the like. Furthermore, the module unit 120-1 of the head includes a motor 121 for head rotation as an actuator, and an image sensor 124 for imaging the surroundings as a sensor.

As similar to Fig. 1, a control program of the main body unit 110 and each module unit 120 of the legged robot 100 described above can be created using the development tool program operating on the development device 200, and further, it is possible to check and verify the operation through the display of 3D graphics animation of a virtual machine using operation of a physics engine operating on the development tool program.

Furthermore, a control program created using the development device 200 or a control program for the entire actual machine 100 developed in a development environment as shown in Fig. 2 (or other development environment) or a control program for each module unit 120 is uploaded to the memory 112 of the main body unit 110 or the memory 123 of each module unit 120 by wired or wireless communication via the USB port 115 of the main body unit 110 or the communication modem 125 of each module unit 120. Then, the uploaded program operates properly at the time of activation of the legged robot 100 or the like.

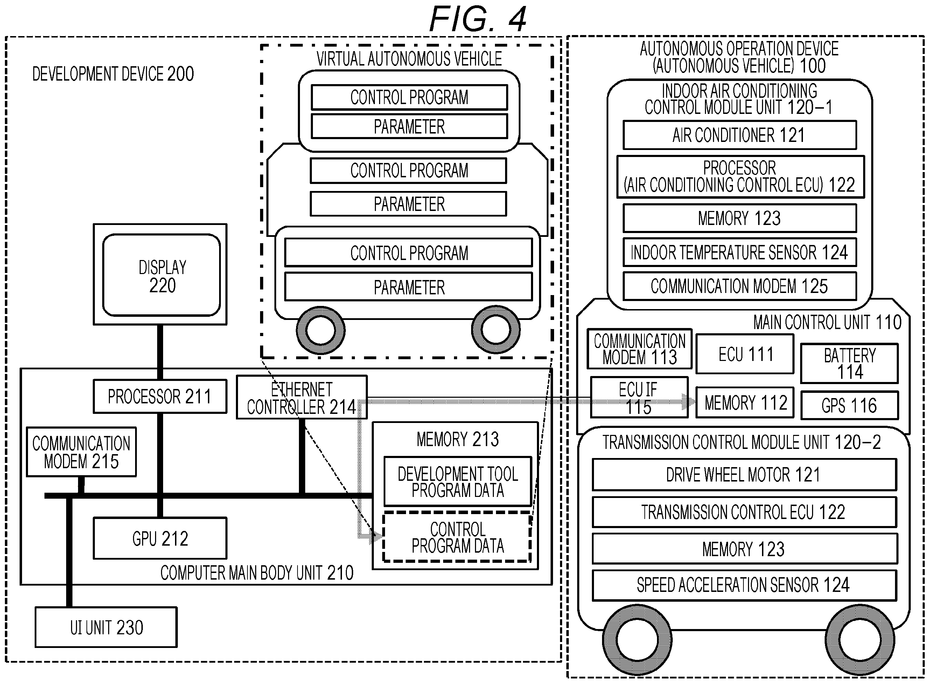

Fig. 4 illustrates a development environment of a control program in a case of developing an autonomous vehicle as another specific example of the autonomous operation device 100. An autonomous vehicle 100 is an automobile (or an unmanned driving vehicle for work or transportation, or the like) to which an autonomous driving technology is introduced, but includes, in addition to a fully automated driving vehicle, vehicles traveling in the automatic driving mode in an automobile in which the automatic driving mode and the manual driving mode can be switched. Although program development is performed using a single development device in Fig. 4, it is of course possible to use a distributed development environment via a network as shown in Fig. 2.

The autonomous vehicle 100 shown in Fig. 4 has a main control unit 110, a transmission control module unit 120-2 as a module unit, and an indoor air conditioning control module unit 120-1. Although not shown, there are a data bus and a control bus (CAN bus or the like) that connect the main control unit 110 and hardware such as each module unit 120. Furthermore, the autonomous vehicle 100 includes many module units (not shown) in addition to the transmission control module unit 120-2 and the indoor air conditioning control module unit 120-1, which are omitted for simplification of the description.

The main control unit 110 includes an electronic control unit (ECU) 111 as a processor, a memory 112, a communication modem 113, an ECU interface 115, a GPS 116, and a battery 114. The communication modem 113 is assumed to be wireless fidelity (Wi-Fi), long term evolution (LTE), near field communication, or the like. Furthermore, the ECU interface 115 is assumed to be an interface to a controller area network (CAN) bus (not shown), and is connected to the development device 200 using a communication standard such as Ethernet (registered trademark).

The indoor air conditioning module unit 120-1 includes an air conditioner 121 as an actuator, an air conditioning control ECU 122 as a processor, a memory 123, an indoor temperature sensor 124 as a sensor, and a communication modem 125 of Bluetooth (registered trademark) communication or the like. For example, it is assumed that the air conditioner 121 is controlled by connecting to an information terminal (not shown) such as a smartphone carried by a passenger by Bluetooth (registered trademark) communication.

The transmission control module unit 120-2 includes a drive wheel motor 121 as an actuator, a transmission control ECU 122 as a processor, a memory 123, a speed acceleration sensor 124 as a sensor, a steering angle sensor, and the like.

Note that, in the configuration example shown in Fig. 4, although the ECUs are arranged in the main control unit 110 and each module unit 120, the ECU 111 in the main control unit 110 may centrally manage all the module units 120.

As similar to Fig. 1, a control program of the main control unit 110 of the autonomous vehicle 100, indoor air conditioning control module unit 120-1, and the transmission control module unit 120-2 described above can be created using the development tool program operating on the development device 200, and further, it is possible to check and verify the operation through the display of 3D graphics animation of a virtual machine using operation of a physics engine operating on the development tool program.

Furthermore, a control program created using the development device 200 or a control program for the entire actual machine 100 developed in a development environment as shown in Fig. 2 (or other development environment) or a control program for each module unit 120 is uploaded to the memory 112 of the main control unit 110 or the memory 123 of each module unit 120 by wired or wireless communication via the ECU interface 115 of the main control unit 110 or the communication modem 125 of each module unit 120. Then, the uploaded program operates properly at the time of activation of the autonomous vehicle 100 or the like.

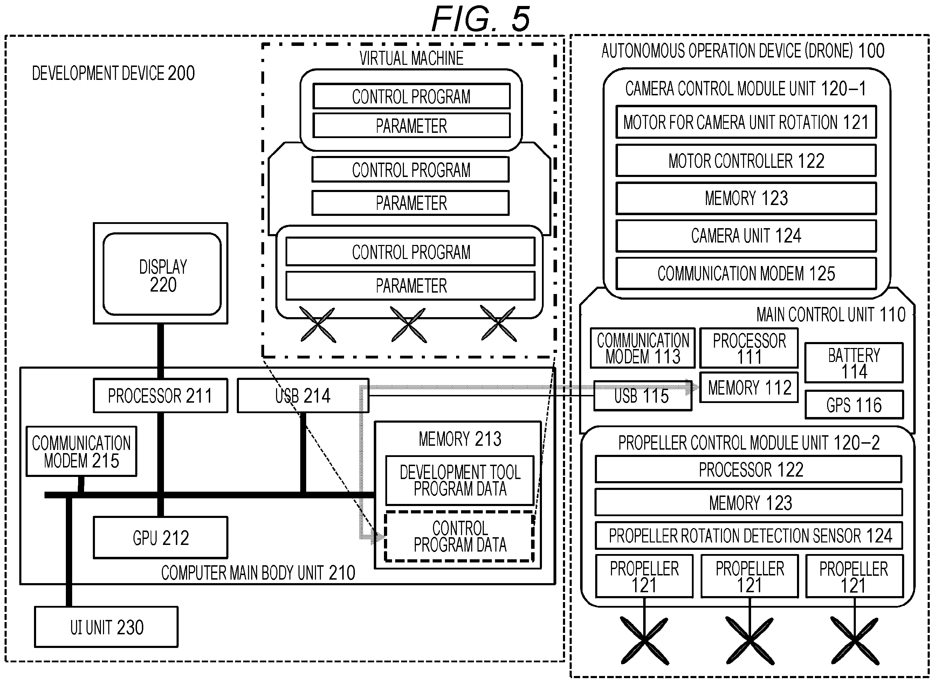

Fig. 5 illustrates a development environment of a control program in a case of developing an unmanned aerial vehicle (drone) as another specific example of the autonomous operation device 100. Although program development is performed using a single development device 200 in Fig. 5, it is of course possible to use a distributed development environment via a network as shown in Fig. 2.

The unmanned aerial vehicle 100 shown in Fig. 5 has a main control unit 110, a camera control module unit 120-1 as a module unit, and a propeller control module unit 120-2. Although not shown, there are a data bus and a control bus that connect the main control unit 110 and hardware such as each module unit 120. Furthermore, in the wireless aircraft 100, a module unit other than the camera control module unit 120-1 and the propeller control module unit 120-2 may be incorporated.

The main control unit 110 includes a processor 111, a memory 112, a communication modem 113, a USB port 115, a GPS 116, and a battery 114. The communication modem 113 is assumed to be a wireless modem of Wi-Fi, LTE, near field communication, or the like, and communicates with a remote controller (not shown) operated by the operator. Furthermore, connection with the development device 200 is made using the USB port 115, and the developed control program is uploaded.

The camera control module unit 120-1 includes a camera unit (including an image sensor) 124 as a sensor, a camera unit rotation motor 121 as an actuator, a motor controller 122 as a processor, a memory 123, and a communication modem 125. The camera unit rotation motor 121 may be rotatable, for example, in the range of 360 degrees in the horizontal direction, and may further be capable of tilt rotation. Furthermore, the communication modem 125 is assumed to be a wireless modem of Wi-Fi, LTE, near field communication, or the like, and performs rotation or photographing of the camera unit 124 according to a command from a remote controller or a smartphone (not shown) operated by the operator.

The propeller control module 120-2 includes, for example, three propellers (including a rotation motor) 121 as an actuator, a processor 122 that performs control of a rotation motor of the propeller 121 or the like, a memory 123, and a propeller rotation detection sensor 124 as a sensor.

As similar to Fig. 1, a control program of the main control unit 110 of the unmanned aerial vehicle 100, the camera control module 120-1, and the propeller control module unit 120-2 described above can be created using the development tool program operating on the development device 200, and further, it is possible to check and verify the operation through the display of 3D graphics animation of a virtual machine using operation of a physics engine operating on the development tool program.

Furthermore, a control program created using the development device 200 or a control program for the entire actual machine 100 developed in a development environment as shown in Fig. 2 (or other development environment) or a control program for each module unit 120 is uploaded to the memory 112 of the main control unit 110 or the memory 123 of each module unit 120 by wired or wireless communication via the main control unit 110 or the communication modem of each module unit 120. Then, the uploaded program operates properly at the time of activation of the unmanned aerial vehicle 100 or the like.

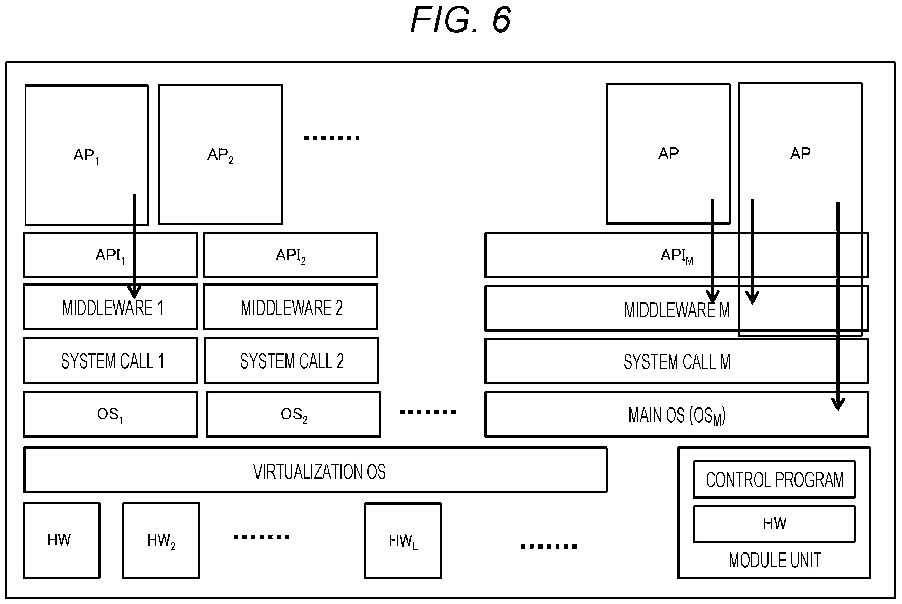

Fig. 6 is shows an example of the configuration of the hardware and software architecture mounted on an actual machine of an autonomous operation device 100.

As shown in Fig. 1 or the like, in the actual machine, a plurality of hardware modules (HW₁, HW₂, ...) of the main body unit (or main control unit), the plurality of module units, and the like is incorporated in a housing. Furthermore, there may be an actual machine configured by distributing and arranging hardware modules in two or more housings.

The OS directly controls these hardware modules (HW₁, HW₂, ...). Furthermore, there is a case where the control program uploaded to the memory 123 in the module unit 120 instead of the OS directly controls the hardware module (specifically, the processor 122 executes the control program and controls the driving of the actuator 121).

As shown in Fig. 1 or the like, in the autonomous operation device 100 in which a hardware architecture is configured by the main body unit 110 and the plurality of module units 120, the main OS that controls the entire the system 100 operates in (the processor 111 of) the main body unit 110 to control the control program being executed in each module unit 120 directly or indirectly.

Fig. 6 shows an example in which a plurality of OSs (for example, OS₁, OS₂, ...) operates in addition to the main OS, and each OS provides an execution environment of an application program. In Fig. 6, for example, in a case where it is desired to drive a hardware module under the management of the main OS by the OS₁, the control program of the desired module unit 120 can be indirectly controlled by the OS₁ communicating with the main OS. Furthermore, communication between the OS₁ and the main OS can be realized using a technology such as remote procedure call (RPC).

Fig. 6 also shows an architecture built using virtualization technology. In other words, a plurality of different operating systems (for example, OS₁, OS₂, ...) is operated on the virtualization OS. Application programs (for example, AP₁ developed for OS₁ and AP₂ developed for OS₂) developed on the assumption of different OSs can be mixed on the same actual machine 100.

For example, when application programs developed in an autonomous vehicle is roughly classified into two kinds of an application program requiring high reliability such as a drive system control (DSU or the like), and an application program having high versatility such as infotainment related to a service for a user (audio equipment, air conditioning, or the like), the former AP₁ is developed assuming a more reliable OS1, and the latter AP₂ is developed assuming an OS2 that has higher versatility and is developable by many developers. Since the driving system control application program AP₁ and the infotainment application program AP₂ developed on the assumption of different OSs as described above can easily control the hardware corresponding to each of them by the intervention of the virtualization OS, the application programs can be mixed on the same autonomous vehicle.

An application program developer can develop an application program using an API provided by a system (for example, middleware). For example, as the API, use of functions such as "map display", "switch to voice dialogue mode", "recognition of surrounding person" may be considered.

Furthermore, the application program developer can develop an application program including a program that instructs the OS using a system call. The system call mentioned here is an interface for utilizing functions related to system control. Examples of the system call may include changing parameters of the processor 122 (for example, motor controller) in the module unit 120, and setting a network address in the communication modem 125.

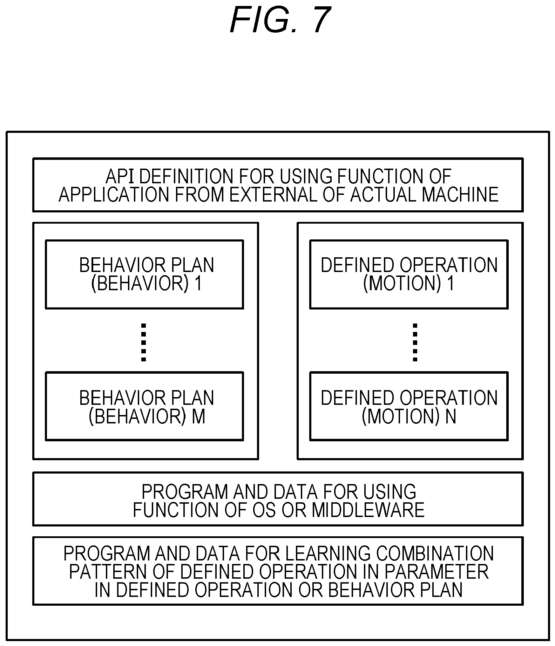

Fig. 7 schematically shows a configuration example of an application program. The application program is developed, for example, on the development device 200 in Fig. 1 (in other words, using the development tool program).

The application program includes one or more defined operations and one or more behavior plans. The defined operation and the behavior plan are both control programs of the autonomous operation device 100.

The defined operation includes target values issued in instruction to a controller of an actuator represented by a motor or the like among hardware, and is also referred to as "motion". There is a case where one defined operation includes only a target value issued in instruction to the controller at a certain point in time, or a series of target values issued in instruction to the controller in time series in a certain section. As described later, in the present embodiment, it is assumed that the defined operation is created using a key frame (as described later).

Furthermore, the defined operation is also a program and data for instructing the controller to set basic parameters. Examples of parameters include P (proportional control), I (integral control), and D (derivative control). Furthermore, parameters that can be set in the controller (processor) according to the characteristics of the actuator to be controlled, such as a motor, can be set as a basic parameter in the defined operation.

An behavior plan includes programs and data that invoke the function of one or more defined operations. The autonomous operation device 100 such as a robot realizes one "behavior" by performing one or more defined operations invoked according to the behavior plan.

Furthermore, the behavior plan is a program and data describing a series of operations of the autonomous operation device 100 by determining defined operation to be activated for each situation. For example, a behavior plan can be mentioned which describes conditional branches for selecting defined operation in the form of a tree structure. Since the behavior plan controls the autonomous operation device 100 according to the recognition result, the behavior plan can be positioned in the behavior control program based on the environment (situation) recognition. In this sense, the behavior plan also corresponds to a part of the functions of artificial intelligence (AI) in a broad sense.

The application program can also include programs and data for utilizing the functions of the OS or middleware.

The application program further defines an API for externally using an application function of the actual machine of the autonomous operation device 100. Therefore, the development device 200 used to create the application program, and the external device such as a user terminal or server can use the function of the application program by invoking the API via communication while the actual machine is operating or testing.

Furthermore, the application program can also include programs and data for causing programs and data of the behavior plan or defined operation to be changed by learning during actual machine operation.

Note that, as shown in Fig. 7, although the application program is configured by a plurality of components, all the components may be integrated and configured into one file, but each component may be configured as a separate file. Furthermore, these files are stored in shared storage on the cloud server in Fig. 2, storage dedicated to each user (in other words, main body unit developer storage, module unit developer storage), storage provided in a dedicated server, or the like, and may be capable of being shared by an administrator, a developer, a customer, or a user who has an access right to storage such as a server.

The application program can be created by a developer of the application program on the development device 200 using the development tool program. The development tool program has functions such as a compiler, a debugger, and 3D graphics animation linked with a physics engine, and a developer of an application program can issue an instruction on execution of these functions on a GUI screen.

Furthermore, in the present embodiment, it is assumed that a development tool program includes a function called a physics engine. The physics engine is a function of reproducing a phenomenon based on the physical law of the operation of the real autonomous operation device 100 on the computer, and considers the physical characteristics of the autonomous operation device 100 and further the realistic external environment to generate 3D graphics animation representing operation similar to real actual machine and display the result. The developer of the application program can verify the operation of the actual machine while watching the 3D graphics animation and further correct the application program appropriately.

Recently, the accuracy of the physics engine has been improved, and the application program for controlling the actual machine operation of the autonomous operation device 100 is operated on the development tool program having the physics engine and the function of 3D graphics animation, so that it has become possible to more accurately reproduce actual machine operation with virtual machines. In particular, since a physics engine that performs high-performance physical operation plays a role corresponding to the hardware of an actual machine (for example, a motor controller), the control program can be verified without using an actual machine, so that development efficiency is improved and development costs is reduced. Furthermore, when the application program including the control program created in this way is operated on the actual machine, the expected operation can be reproduced on the actual machine.

As described above, in a case where the development tool program that can reproduce a physical phenomenon close to the real environment is available, reflecting the mechanical and electrical characteristics of the hardware mounted on the actual machine in the application program to be developed has become more meaningful than before. For example, PID control is used in motor control. In PID control, a proportional gain KP, an integral gain KI, and a derivative gain KD are parameters that determine the characteristics in control, and are important in determining the operation of hardware. Conventionally, it has been necessary to adjust the parameters of the motor controller of the actual machine by, for example, directly rewriting the program of the actual machine. On the other hand, if the control parameters such as KP, KI, and KD are made to be able to be input or changed in a development tool program equipped with a physics engine and a 3D graphics animation function, control parameters or the like is changed on the development tool program, so that the physics engine reads these control parameters to perform calculations, and displays them on the display using 3D graphics animation, so that is possible to easily check the expected operation in the actual machine. For this reason, the efficiency of application program development for an actual machine can be greatly improved.

As an example of an actual machine, development of an application program for a robot (hereinafter, mainly referred to as "control program") will be described. In a conventional robot development environment, a method of creating defined operation using a key frame has been used on a GUI screen or the like. An example of the key frame is defined operation of "moving a joint from Y degrees to Z in X seconds". However, the actual physical action of the robot is influenced by the control parameters of the motor such as the proportional gain KP, the integral gain KI, and the derivative gain KD, and the hardware characteristics of the motor. Therefore, in the development tool program, in order to more accurately reproduce the operation of the actual machine using a virtual machine, it is necessary to interpolate the operation of the key frame in consideration of the physical phenomenon by performing physical operation continuously in time, taking into consideration, for example, motor control parameters and hardware characteristic values, in addition to key frame information that specifies in discrete time the movement of a movable unit such as one joint that constitutes a robot. However, since the control parameters of the motor and the hardware characteristic values are different information for each robot, it is not possible to easily check such information in the conventional development environment.

Therefore, in the present specification, the following proposes a technology of providing a means with which the developer can easily input or change hardware characteristics and control parameters on the actual machine of the autonomous operation device 100 (such as a robot) to be controlled when a control program is developed using a development tool program having a physics engine and a 3D graphics animation function. In a development environment where such means is provided, a control program can be developed taking into account the hardware characteristics and control parameters of the actual machine, and a physical phenomenon can be reproduced on a development tool program with a physics engine and 3D graphics animation functions, so that actual machine operation can be grasped more accurately.

A developer can check whether the control parameters input or changed in the development environment are useful for realizing predetermined operation, through the physics engine operating on the development tool program and 3D graphics animation. Therefore, in the present specification, the following further proposes a technology of providing a means for recording in the development environment the control parameters that the developer judges to be useful in realizing the predetermined operation so that they can be selected in the actual machine operation. Therefore, the recorded control parameters can be mounted on the actual machine together with the control program developed through the development tool program, and can be used to select the operation of the actual machine.

Furthermore, in the present specification, the following also proposes a method for performing motor control of key frames in combination with physical operation provided by a physics engine in a development environment of defined operation including a data set of key frames specifying target values such as angles of each movable unit. According to the method for developing a control program using such a physics engine and 3D graphics animation, it is possible to check the action in the real world by the defined operation created using a key frame, without using an actual machine. Therefore, in a single development environment, a developer can easily create defined operation (or a key frame included in defined operation), and can perform action checking in the real world.

The control program (application program) developed under the development environment proposed herein may include a controller characteristic data set for each hardware component such as motor control parameters (the hardware component corresponds to the each module unit 120 in Fig. 1). The developer can input controller characteristic data for each hardware component, such as motor control parameters, in the process of creating and editing the control program, and can view and change 3D graphics animation displayed by the control program operating on the development tool program.

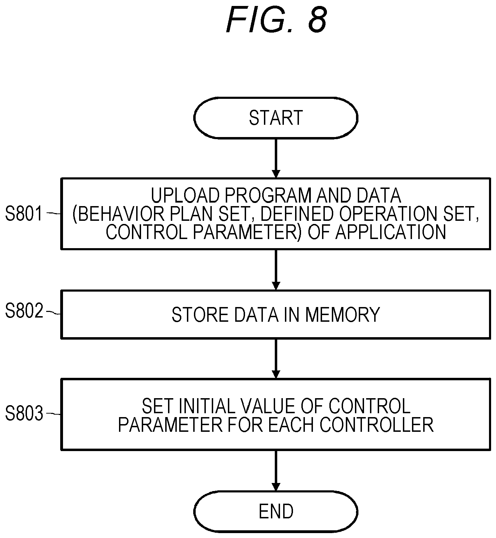

Fig. 8 shows, in the form of a flowchart, processing procedures for installing program and data of an application program including a control program developed on the development tool program according to the method proposed in the present specification in an actual machine. Here, assumed is a case where the application program including the control program developed by the development device 200 in Fig. 1 is installed in the autonomous operation device (actual machine) 100. The development tool program is equipped with a library that provides the same API as the OS (including middleware) that operates on an actual machine, so that an application program including the same control program as that developed by the development tool program can be installed in the actual machine.

An application program is uploaded from the memory 213 of the development device 200 to the actual machine 100 via the USB port 214 or the like (step S801). The application program includes a program such as a set of behavior plans and a set of defined operations (see Fig. 7), and a data set of control parameters (for example, PID data for motor controller) for the processor 111 for each hardware component (module unit).

On the actual machine 100 side, the application program uploaded from the development device 200 is stored in the memory 112 in the main body unit 110 (step S802). Then, an initial value of a control parameter for each module unit 120 described in the application program is set in the processor 122 (a motor controller or the like) that controls the actuator 121 (a motor or the like) (step S803), and the processing routine is ended.

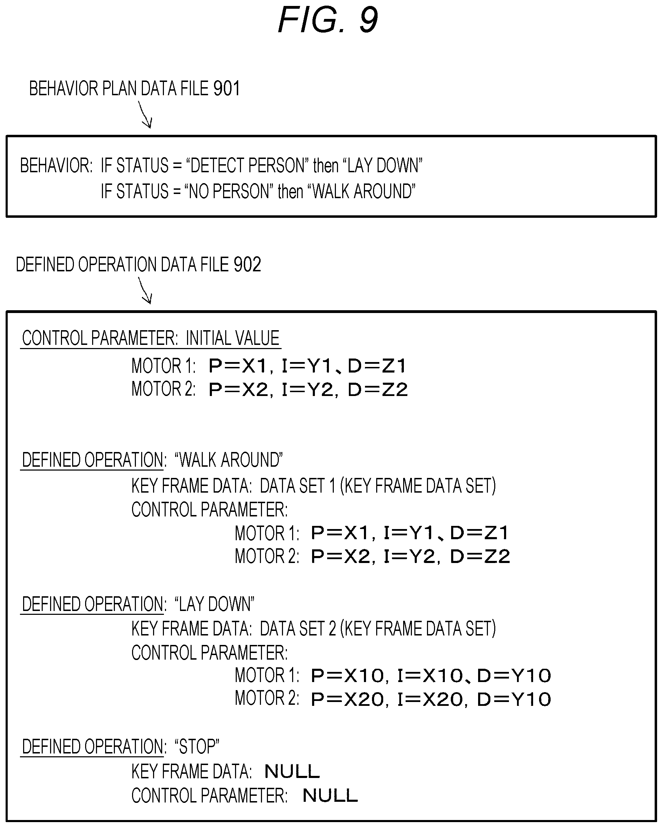

Fig. 9 schematically shows a configuration example of each data file of the behavior plan and the defined operation included in the application program. In the drawing, for convenience of explanation, the data in the file is described in the form of a natural language which does not depend on a specific program language. However, those skilled in the art can easily understand that the data file as illustrated can be coded using any programming language.

A behavior plan data file 901 is a set of data in which a conditional branch for selecting defined operation is described in the form of a tree structure. In the example shown in Fig. 9, the condition for selecting the defined operation is described in the form of an IF sentence (IF status = "detect person" then "lay down", IF status = "no person" then "walk around"). Note that, although Fig. 9 shows data of the behavior plan 901 including a simple IF sentence for convenience of explanation, the sentence may be a complex conditional sentence including a nested structure and the like.

Defined operation data file 902 includes a data set of a plurality of defined operations used in the behavior plan 901, as well as initial values of control parameters for each hardware component. In the example shown in Fig. 9, the defined operation data file 902 includes PID parameter values (P = X1, I = Y1, D = Z1) for motor 1 and PID parameter values (P = X2, I = Y2, D = Z2) for motor 2 as initial values of control parameters.

Furthermore, in the example shown in Fig. 9, the defined operation data file 902 includes data of defined operation of "walk around", "lay down", and "stop". The data of each defined operation includes a data set of key frames and control parameters for each hardware component (for example, PID parameters to be set to the motor controller).

The key frame includes data of target values (for example, target values such as a rotational position and a rotational angle with respect to a motor as the actuator 121) set in each module unit 120. One defined operation includes a data set of one or more key frames.

Furthermore, the control parameter specified in the defined operation is a control parameter to be set in the defined operation. As described later, in the present embodiment, in the process of developing a control program such as defined operation, an optimal control parameter can be derived on the basis of the operation result of the physics engine and the display result of 3D graphics animation, and a developer of the program can describe optimal control parameters for each defined operation in the defined operation. Note that the key frame data and the controller characteristic data of the defined operation "stop" are both NULL. NULL may be an initial value.

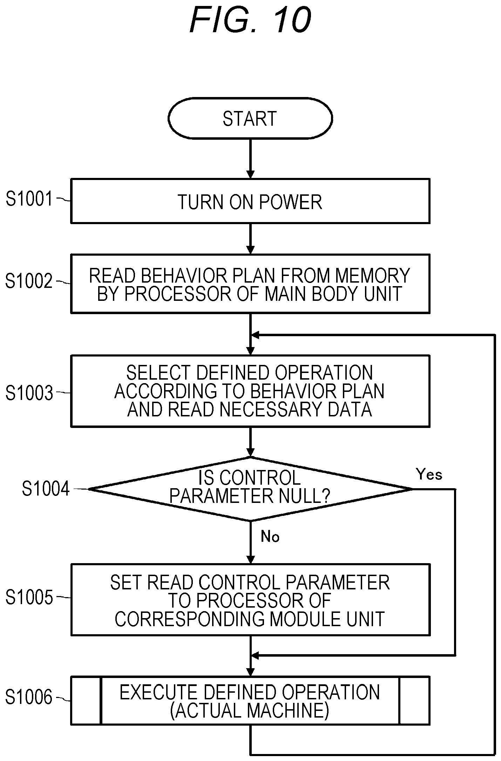

Fig. 10 shows a processing procedure when the application program is operated on the autonomous operation device (actual machine) 100 (in other words, the actual machine operation) in the form of a flowchart. It is assumed that an application program including a set of behavior plans and a set of defined operations as shown in Fig. 9 is uploaded to the memory 112 of the main body unit 110 of the actual machine 100.

When the power of the actual machine 100 is turned on (step S1001), the processor 111 reads the data file of the behavior plan from the memory 112 (step S1002).

The behavior plan describes a conditional branch for selecting defined operation according to environment information. The processor 111 selects the defined operation according to the behavior plan according to the environment information recognized on the basis of the detection result of the sensor 123 of each module unit 120 or the like. Then, the processor 111 reads from the memory 112 data such as key frames and control parameters required to perform the selected defined operation (step S1003).

Here, the processor 111 checks whether or not the control parameter read for performing the defined operation is NULL (step S1004). If the control parameter is not NULL (No in step S1004), the processor 111 sets the read control parameter in the processor 122 of the corresponding module unit 120 (step S1005). Furthermore, when the control parameter is NULL (Yes in step S1004), the setting processing (in other words, optimization of the control parameter) is unnecessary, so that step S1005 is skipped.

Then, on the actual machine 100, the defined operation is performed (step S1006). In each module unit 120, after setting control parameters (such as control parameters of the motor) suitable for the defined operation, drive control to the target value issued in instruction in the defined operation can be performed.

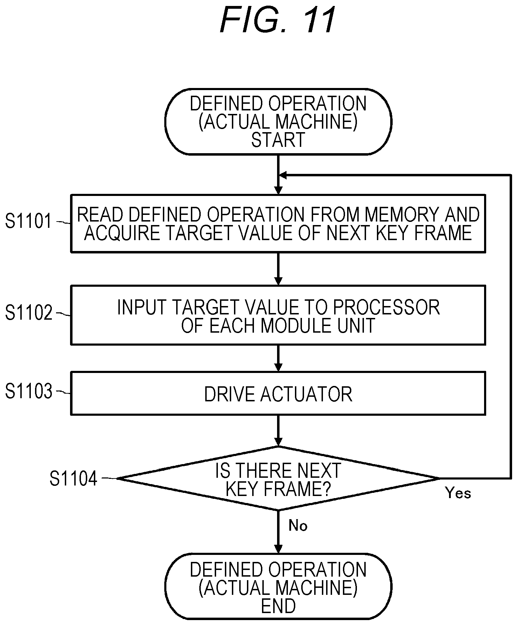

Fig. 11 shows, in the form of a flowchart, a detailed processing procedure for performing the defined operation, which is performed in step S1006 in the flowchart shown in Fig. 10.

First, the processor 111 reads data of the defined operation from the memory 112, and acquires a target value (for example, a rotation angle of a motor) of each module unit 120 specified by the next key frame (step S1101).

Next, the processor 111 transfers the acquired target value to each module unit 120, and inputs the target value to the processor 122 of each module unit 120 (step S1102). For example, the target value of the rotation angle of the motor is input to the motor controller.

Next, in each module unit 120, the processor 122 drives the actuator 121 in accordance with the input target value (step S1103). For example, the motor controller drives the motor in accordance with the target value of the rotation angle.

Then, the above processing is repeatedly performed until all key frames included in the defined operation have been performed (No in step S1104).

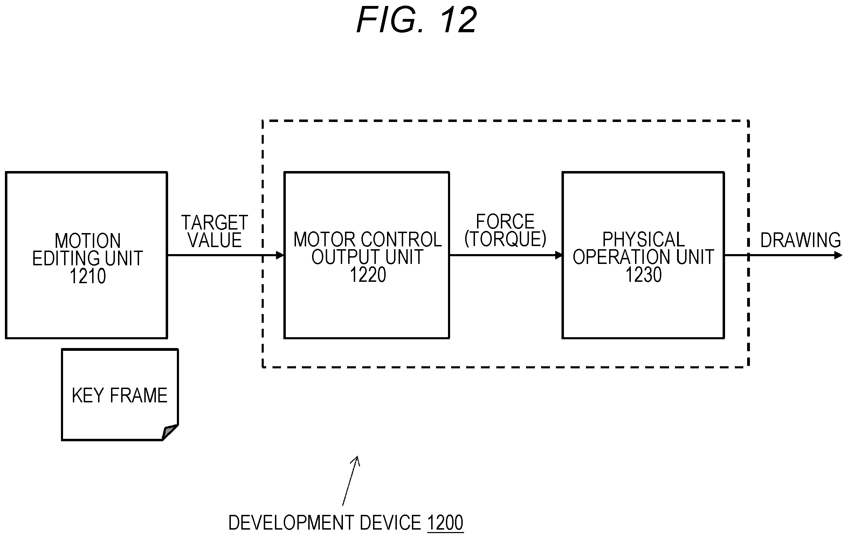

Fig. 12 schematically shows a functional configuration of the development device 1200 for creating and verifying the defined operation of the autonomous operation device 100 to be controlled, which is proposed in the present specification. Here, it is assumed that the autonomous operation device 100 is an actual machine provided with a movable unit driven by a motor such as a joint, such as a robot. Furthermore, the development device 1200 corresponds to, for example, the development device 200 that executes the development tool program in Fig. 1, and each functional block shown in Fig. 12 is implemented as a software module included in the development tool program, for example.

The illustrated development device 1200 includes a motion editing unit 1210 with which the developer edits the defined operation to be controlled in the form of a key frame, a motor control output unit 1220 that calculates a control output by the motor controller according to a key frame to be input on the basis of the input or set control parameter, and a physical operation unit 1230 that performs a physical operation through a program execution call API of a physics engine that calculates a physical action when the motor is driven.

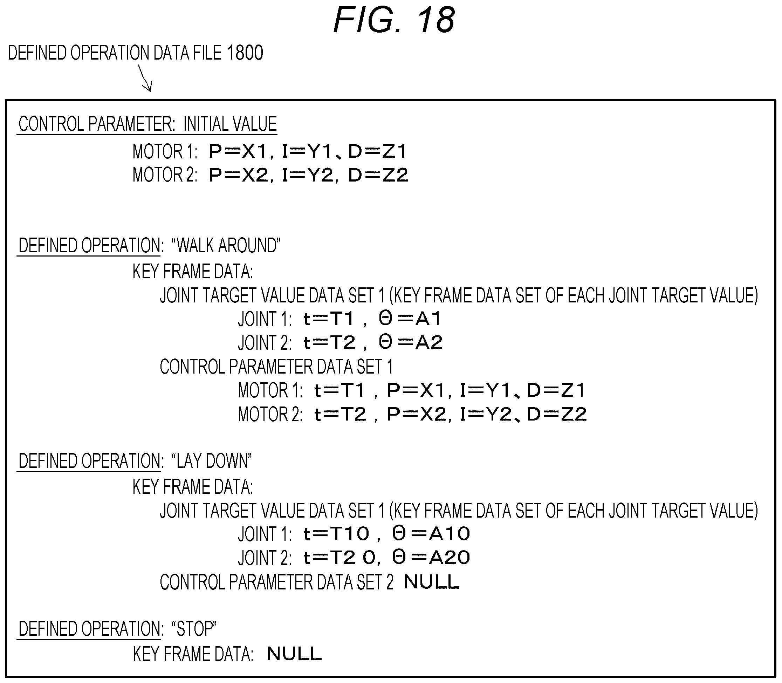

The motion editing unit 1210 creates a key frame to be controlled. The motion editing unit 1210 presents a developer with a GUI for specifying a target value such as a joint angle of each movable unit to be controlled such as a robot, and the developer creates a key frame through an instruction via the GUI, and stores the key frame in a predetermined memory (not shown) in a predetermined format (for example, the format of "key frame data" in the defined operation shown in Fig. 18 (described later)).

The screen configuration of the GUI for creating the key frame is arbitrary. The key frame is a set of data specifying a target value such as the position and speed of the movable unit at the start and end of the operation of a certain section. For example, a GUI in which the target value of each movable unit for each key frame is input may be used. Furthermore, a method of using the 3D model to be controlled, specifying the position and orientation of specific parts such as the head and left and right limbs, and creating a key frame using inverse kinematics (IK) operation may be applied.

Furthermore, the motion editing unit 1210 accepts input of control parameters of the motor for driving each movable unit to be controlled and hardware characteristic values of the motor via the GUI, and holds the control parameters and the hardware characteristic values in a predetermined memory (not shown), in a predetermined format (for example, a format such as "control parameter data set 1" in the defined operation shown in Fig. 18 (described later)). Furthermore, the motion editing unit 1210 also accepts input of 3D model data describing hardware characteristic values of the actual machine to be controlled, and holds the 3D model data in a predetermined memory (not shown). A GUI screen configuration for inputting motor control parameters and motor hardware characteristic values is arbitrary.

The motor control output unit 1220 reads from a predetermined memory (described above) a key frame including target values such as joint angles in each movable unit to be controlled, motor control parameters, motor hardware characteristic values, or the like, to calculate the force or torque output by the motor driving each movable unit by operation. Next, the physical operation unit 1230 calculates the current value such as the joint angle of each movable unit on the basis of the force or torque of the motor obtained by the physical operation.

Then, on the basis of the current value of each movable unit calculated by the physical operation unit 1230, the current posture of the control target can be drawn by 3D graphics and displayed on the display. For example, the current posture of the control target is calculated at a predetermined frame rate and drawing processing is performed, so that the animation of the action of the control target at the time of being driven on the basis of the defined operation edited in the form of a key frame can be displayed. Therefore, the developer can view the animation and check the defined operation edited by himself/herself.

As a feature of the development device 1200 according to the present embodiment, in the motor control output unit 1220, characteristic values of the motor itself that drives each movable unit and control parameters according to the control method of the motor are previously input or set (for example, input by the motion editing unit 1210). Furthermore, in the physical operation unit 1230, characteristic values on the hardware of the actual machine to be controlled by the defined operation are previously input or set. Furthermore, the operation by the motor control output unit 1220 is performed together with the operation of the physical operation unit 1230.

The motor control output unit 1220 and the physical operation unit 1230 are configured as respective software modules in a single application program (software modules do not include software modules included in the development tool program such as physics engine, and invokes functions such as physics engine by API). "Configured as respective software modules in a single application program" means that the motor control output unit 1220 performs operation invoked by the API in the physical operation unit 1230 using the control output of the motor calculated on the basis of the key frame, hardware characteristic values, and control parameters according to the operation of one application program on the development tool program. Furthermore, the characteristic values of the motor itself, control parameters of the motor, and hardware characteristic values of the actual machine to be controlled can be set using the GUI in the same development tool program.

Here, control parameters corresponding to the control method of the motor are, for example, a proportional gain KP, an integral gain KI, and a derivative gain KD. Of course, depending on the control method of the motor adopted in the actual machine, control parameters other than PID are used. Furthermore, the hardware characteristic values of the motor are, for example, a manufacturer name of a motor, model number, mounting angle dimensions, type, shaft type, presence or absence of electromagnetic brake, driver type, rated output, rated rotational speed, maximum rotational speed, maximum input rotational speed, rated torque, instantaneous maximum torque, excitation maximum static torque, speed range, rotor inertia moment, inertia moment, resolution (motor shaft) (P/R), detector (encoder), backlash, reduction ratio, power input voltage, power input frequency, power input rated voltage, speed and position control command, maximum input pulse frequency, motor unit mass, and the like. These control parameters and characteristic values of the motor can be taken into the tool (development device 1200) in the form of a setting file or the like. Furthermore, a GUI may be provided for the developer to set or change the control parameter of the motor in the editing process of the defined operation or the like.

Furthermore, besides the hardware characteristic values of the motor described above, the hardware characteristic values of the actual machine are, for example, the weight , the center of gravity, the inertia, the movable range of the joint, the friction coefficient, and the like of each arm and each part such as a joint motor. These characteristic values on hardware of the actual machine (such as a motor) may be imported into the tool (development device 1200) in the form of a predetermined file in which data is described together with the 3D model of the virtual machine that simulates the actual machine. Furthermore, modeling (data creation) of a 3D model may be performed using a predetermined GUI provided on the development tool program, and characteristic values on hardware may be input or edited. Moreover, 3D models and hardware characteristic values may be managed separately. The hardware characteristic values and 3D model of the actual machine provided in a predetermined format can be stored in a file, and, for example, can be managed in the shared storage on the cloud server shown in Fig. 2 as information that can be shared on a database together with identification information (ID) of a file such as a file name. In another embodiment, the hardware characteristic values and the 3D model may be stored and managed in separate files. Furthermore, each development manufacturer or information provider for commerce can provide, in each of the owned transaction databases, these pieces of shareable information (in other words, information managed as electronic files available on the development tool program, such as 3D models and hardware characteristic values), as an online trading target, by managing the information together with manufacturer name, model number, or hardware type (motor type (stepping motor, DC motor, ultrasonic motor, or the like), sensor type (CMOS image sensor, CCD image sensor, ranging image sensor, InGaAs image sensor, photodiode array with amplifier, X-ray image sensor, or the like), or the like) and using the information as browsing information for information acquirers and buyers such as users and developers.

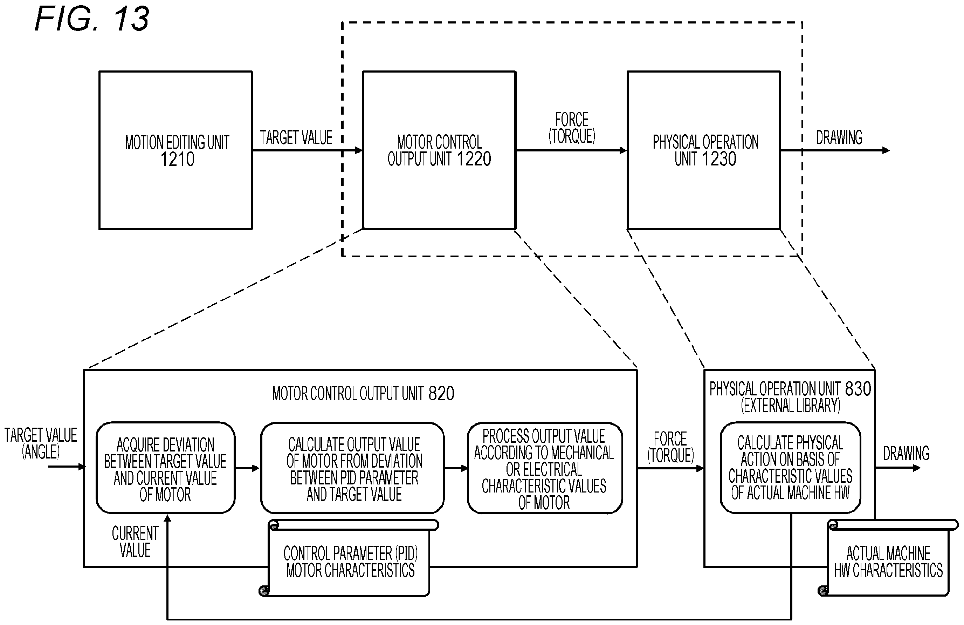

Fig. 13 shows the internal operation of each of the motor control output unit 1220 and the physical operation unit 1230 in detail.

The motor control output unit 1220 inputs a target value (joint angle) of the motor to the physical operation unit 1230 as data of the key frame edited by the motion editing unit 1210. The motor control output unit 1220 is configured to receive the current value of the motor changed as the operation result from the physical operation unit 1230, and to determine a deviation of the target value and the current value. Then, the motor control output unit 1220 adds P control input, I control input, and D control input based on proportional gain KP, integral gain KI, and derivative gain KD, respectively, to obtain a control input value to the motor, and calculates the force or torque as the output value of the motor with respect to the control input value. However, the logic can be changed to a logic other than PID calculation according to the control method of the motor adopted in the actual machine. Then, in a case where there is a significant one of the mechanical or electrical hardware characteristic values (described above) of the motor, the motor control output unit 1220 performs processing such as correction on the output value.

The physical operation unit 1230 instructs the physics engine via the API to perform calculation corresponding to the physical action of the actual machine at the time of driving the motor on the basis of the output value (force or torque) calculated by the motor control output unit 1220, in consideration of characteristic values on hardware such as weight, center of gravity, inertia, movable range of joint, and friction coefficient of each part such as arm and joint motor. For physical operation, a library incorporated in a development tool program may be used, or an external library available via the Internet or the like may be incorporated and used. Furthermore, the current value of the motor calculated by the physical operation unit 1230 is fed back to the motor control output unit 1220.

Then, on the basis of the current value of each movable unit calculated by the physical operation unit 1230, the current posture of the control target can be subjected to drawing processing and displayed on the display. For example, the current posture of the control target is calculated at a predetermined frame rate and drawing processing is performed, so that the 3D graphics animation of the action of the control target at the time of being driven on the basis of the defined operation edited can be displayed.

The developer can view the 3D graphics animation of the virtual machine reproduced by executing the application program on the development tool program, and check the defined operation edited by himself. For example, in a case where the action of the control target is different from the image drawn by the developer at the time of defined operation editing, or in a case where the control target falls or collides with an obstacle, the key frame is changed in the motion editing unit 1210 so that it is possible to create defined operation that allows the control target to act as the image, or to prevent a fall or a collision.

Furthermore, the developer can dynamically update the target value of the motor while observing the animation of the control target obtained as a result of performing the physical operation, to change, reproduce, and check the action of the control target.

Furthermore, when correcting the key frame according to the physical operation result or the like, the developer can not only correct the target value of the motor, but also change the control parameter values of the motor such as proportional gain KP, integral gain KI, and derivative gain KD, to set appropriate control parameters. As already described with reference to Fig. 9, control parameters can be specified for each defined operation. Furthermore, in a case where the defined operation is defined by a plurality of key frames, the developer may specify an appropriate control parameter for each key frame (described later).

When the editing of the defined operation is completed, the optimal control parameter value of the motor at the time of executing the defined operation can be incorporated in the defined operation and extracted. In the configuration example of the application program shown in Fig. 9, the initial value of the control parameter and the control parameter for each defined operation are described in the data file of the defined operation. Of course, the control parameter may be extracted as another file (such as an attribute file) linked to the defined operation data.

Then, as described in the installation procedure of the application program shown in Fig. 8, when the application program is installed in the actual machine 100, the initial value of the control parameter at the time of executing the behavior plan is set to each module unit 120. Furthermore, as described in the processing procedure of the actual machine operation of the application program shown in Fig. 10, each time the defined operation is selected according to the behavior plan, the control parameter specified in the defined operation is set in each module unit 120. Therefore, on the actual machine 100, the motor controller 122 can control the motor 121 according to the target value specified in the defined operation using the control parameter whose operation has been checked in combination with the defined operation in the development tool program. As a result, it is possible to reproduce the expected action similar to the result of checking the operation with the physical development tool program on the actual machine.

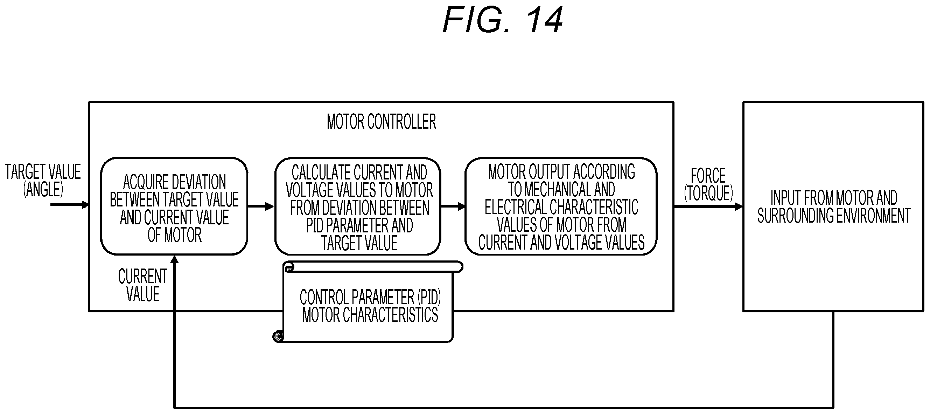

Fig. 14 shows a control block diagram of an actual motor as a comparison with the processing in the motor control output unit 1220 and the physical operation unit 1230 shown in Figs. 12 and 13.

When the target value (joint angle) of the motor specified by the key frame is input and, for example, the current value of the motor measured by the encoder installed on the output shaft side of the motor is input, the motor controller determines the deviation of the target value and the current value. Then, the motor controller adds P control, I control, and D control based on the proportional gain KP, the integral gain KI, and the derivative gain KD, respectively, to calculate a voltage value or current value to be a control input to the motor. When the motor is driven by being supplied with a voltage value or current value calculated by the motor controller, the motor outputs a force or torque according to the mechanical and electrical characteristics of the motor itself. In the real world, the output of the motor interacts with the surrounding environment, and the current value of the motor is measured by a sensor such as an encoder.

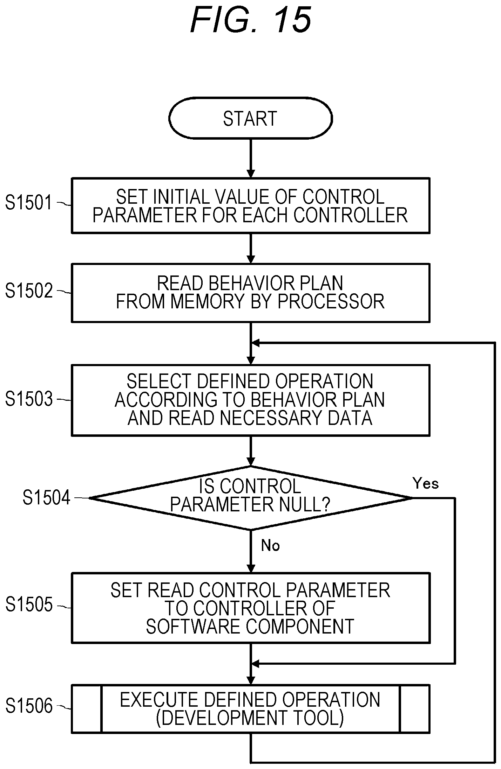

Fig. 15 shows, in the form of a flowchart, a processing procedure for executing the developed application program on the development tool program including the physics engine and the 3D graphics animation function in the development device 200. The action of the virtual machine according to the developed application program is reproduced by software modules such as the motor control output unit 1220 and the physical operation unit 1230 shown in Fig. 12.

Here, although the application program includes the behavior plan data file and the defined operation data file as shown in Fig. 9, it is assumed that the application program is already stored in the memory 213 of the development device 200. The development device 200 uses, in the development tool program, a virtual machine operating in 3D graphics space using a physics engine, instead of the motor 121 of the actual machine of the autonomous operation device 100 or the like. The virtual machine includes computer programs and data including data for 3D graphics animation (described above). The virtual machine includes a software component corresponding to each module unit 120 of the actual machine (the autonomous operation device 100) (corresponding to a control program or a part thereof operating on a processor (in case of being processed by one processor in the actual machine, the one processor) of each hardware component, in a case of being downloaded to the actual machine) in the application program.

First, the processor 211 reads an initial value of a control parameter for each hardware component specified in the defined operation data file from the memory 213, and sets the initial value to the motor controller (a memory region in the software component) that drives and controls each motor constituting the virtual machine (step S1501).

Then, the processor 211 reads the data file of the behavior plan from the memory 213. The behavior plan describes a conditional branch for selecting defined operation according to environment information. The processor 211 selects defined operation according to the behavior plan according to the assumed virtual environment or the like. Then, the processor 211 reads from the memory 213 data such as key frames and control parameters required to perform the selected defined operation (step S1503).

Here, the processor 211 checks whether or not the control parameter read for performing the defined operation is NULL (step S1504). In a case where the control parameter is not NULL (No in step S1504), the processor 211 sets the read control parameter in the controller of the corresponding software component (step S1505). Furthermore, when the control parameter is NULL (Yes in step S1504), the setting processing (in other words, optimization of the control parameter) is unnecessary, so that step S1505 is skipped.

Then, using the development tool program having the physics engine and the 3D graphics animation function, the defined operation by the virtual machine is performed (step S1506). In each software component, after setting control parameters (such as control parameters of the motor) specified by the defined operation, drive control to the target value issued in instruction in the defined operation can be performed.

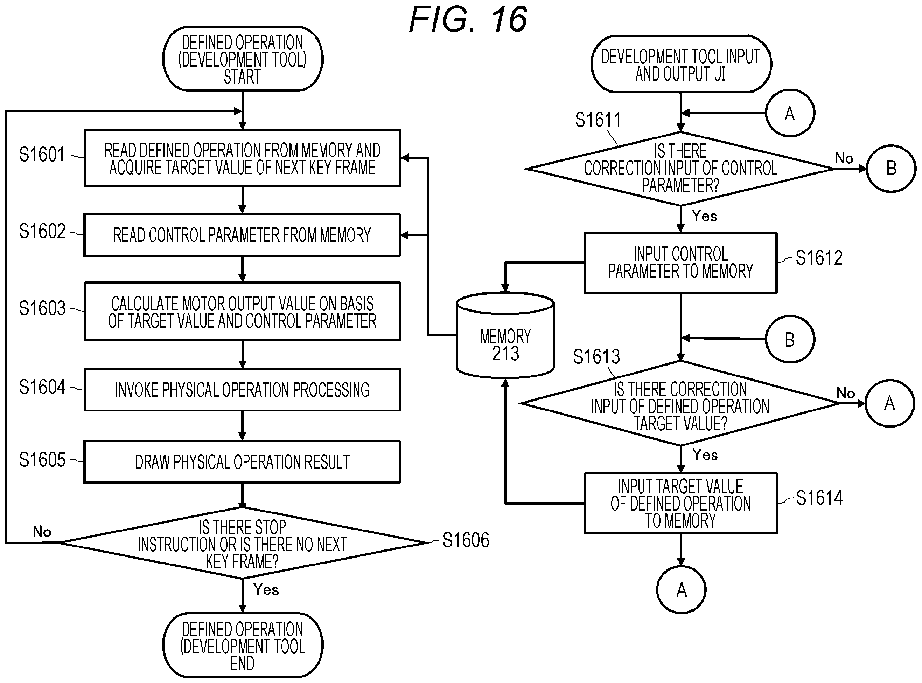

Fig. 16 shows, in the form of a flowchart, a detailed processing procedure for realizing the defined operation by the virtual machine using the development tool program having a physics engine and a 3D graphics animation function, which is implemented in step S1506 in the flowchart shown in Fig. 15.

Note that it is assumed that, during processing of the defined operation, a GUI is presented for the developer to correct and input at any time the target value of the actuator (motor or the like) of each module unit or the control parameter (PID parameter or the like) set in the processor (motor controller or the like) that controls the driving of the actuator. Furthermore, it is assumed that the target value and the control parameter input via such a GUI are appropriately rewritten on the memory 213, and the application program operating on the development tool program can read the latest target value and control parameter after correction from a predetermined memory (described above) through the API provided by the development tool program, and executes the processing of the defined operation using the updated data.

First, the processor 211 reads data of the defined operation from the memory 213, and acquires a target value (for example, a rotation angle of a motor) of each software component specified by the next key frame (step S1601).

Furthermore, the processor 211 reads the control parameter specified in each software component from the memory 213 (step S1602).

Then, the processor 211 determines the deviation of the target value and the current value of the motor in each software component as processing corresponding to the above-described motor control output unit 1220, obtains the control input value to the motor on the basis of the control parameters such as the proportional gain KP, the integral gain KI, and the derivative gain KD, then calculates the force or torque as the output value of the motor, and outputs the calculation result to the physical operation unit 1230 (step S1603).

Note that, in the motor control output calculation, the hardware characteristic values of the motor are also taken into consideration. The hardware characteristic values of the motor are, for example, a manufacturer name of a motor, model number, mounting angle dimensions, type, shaft type, presence or absence of electromagnetic brake, driver type, rated output, rated rotational speed, maximum rotational speed, maximum input rotational speed, rated torque, instantaneous maximum torque, excitation maximum static torque, speed range, rotor inertia moment, inertia moment, resolution (motor shaft) (P/R), detector (encoder), backlash, reduction ratio, power input voltage, power input frequency, power input rated voltage, speed and position control command, maximum input pulse frequency, motor unit mass, and the like.

Next, when the output value of the motor is input from the motor control output unit 1220, as the processing of the physical operation unit 1230 described above, the processor 211 causes the physics engine to perform operation in consideration of characteristic values on hardware of the actual machine such as weight, center of gravity, inertia, movable range of joint, and friction coefficient of each part such as arm and joint motor (step S1604) to calculate the physical action of the actual machine.

For physical operation of step S1604, a library incorporated in a development tool program may be used, or an external library available via the Internet or the like may be incorporated and used. Furthermore, the current value of the motor calculated by the physical operation unit 1230 is fed back to the motor control output unit 1220.

Then, on the basis of the current value of each movable unit calculated by the physical operation unit 1230, the current posture of the control target can be subjected to drawing processing, and outputs the 3D graphics animation of the actual machine to be displayed on the display (step S1605). The drawing of the operation result by the physics engine may be performed every key frame, but may be performed at intervals of several key frames. The developer can view the 3D graphics animation of the virtual machine reproduced by the operation of the physics engine and, check whether the defined operation edited by himself/herself is as expected.

During processing of the defined operation, a GUI is presented for correcting and inputting at any time the target value of the actuator (motor or the like) of each software module unit or the control parameter (PID parameter or the like) set in the processor (motor controller or the like) that controls the driving of the actuator (described above). The developer can appropriately correct the target value and control parameter input via such a GUI. Furthermore, the contents of rewriting the motor control parameter and the target value are reflected in real time in the processing of the application program operating on the development tool program.

Until a stop instruction is issued from the developer, or until all key frames included in the defined operation have been executed (No in step S1606), processing of the defined operation by the motor control output unit 1220 and the physical operation unit 1230 is continuously performed.

When the developer checks the processing result of the virtual machine by the application program operating on the development tool program, and completes and satisfies the editing of the defined operation, the develop issues a stop instruction of the application program (Yes in step S1606). As a result, the application program including the motor control output unit 1220 and the physical operation unit 1230 is stopped, and the process ends. When editing of the defined operation is completed, control parameter values of an actuator such as a motor are incorporated into the data file of the defined operation and extracted. Of course, the control parameter of the actuator may be extracted as another file linked to the data file of the defined operation.

During processing of the defined operation of the application program operated on the development tool program as described above, a GUI is presented for correcting and inputting at any time the target value of the actuator of each module unit or the control parameter set in the processor that controls the driving of the actuator (described above). The developer can correct the target value and the control parameter input via such a GUI as appropriate, and the corrected contents are reflected in real time in the processing of the application program operating on the development tool program.

Fig. 16 also shows a flowchart of a processing procedure for inputting and outputting the correction result of the control parameter and the target value of the defined operation to the development tool program through the GUI during the processing of the defined operation.

When correction input of the control parameter is performed via the GUI during the processing of the defined operation, (Yes in step S1611), the correction-input control parameter is written to the corresponding address on the memory 213 (step S1612).

Furthermore, when correction input of the target value of the defined operation is performed via the GUI during the processing of the defined operation (Yes in step S1613), the correction-input control parameter is written to the corresponding address on the memory 213 (step S1614).

Therefore, it should be fully understood that, in the present development environment, the contents of rewriting the motor control parameter and the target value are reflected in real time in the processing of the application program operating on the development tool program, so that the developer can check the operation of the actual machine immediately after correcting the control parameter and the defined operation target value.

The data file of the defined operation shown in Fig. 9 has a data format in which only one set of control parameters is specified for each defined operation. Furthermore, in the actual machine operation processing of the application program shown in Fig. 10, when the defined operation is selected according to the behavior plan, the process procedure is to set the control parameter in each module unit only once at the beginning. In other words, only one set of control parameters is specified in one defined operation, and it is not supposed to change the control parameter in the middle.

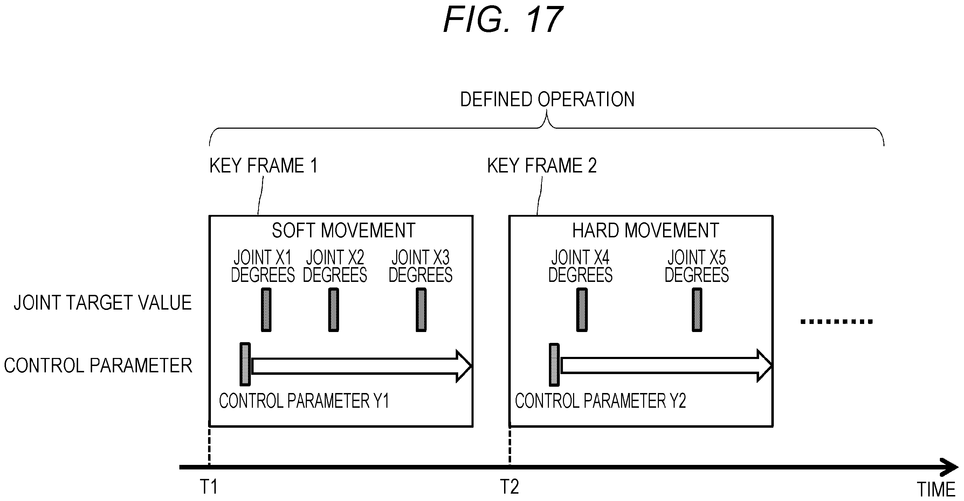

As a modification of the above, as shown in Fig. 17, the control parameter may be changed during execution of the defined operation. Specifically, in the defined operation including a plurality of key frames, a data format may be used in which the control parameter can be specified for each key frame. In this way, even in one defined operation, it is possible to specify a control parameter that makes the joint move softly and a control parameter that makes the joint move hard for each key frame. Furthermore, when the actual machine executes such defined operation, it is possible to realize operation in which the joint shifts from the soft motion to the hard motion according to the elapsed time.

Fig. 18 shows an example data format 1800 of defined operation capable of specifying a control parameter for each key frame. Each key frame includes a data set specifying joint target values and a data set specifying control parameters.

Furthermore, even in one defined operation, the timing for setting the control parameter may be individually specified for each hardware component. In the example shown in Fig. 18, for example, in the defined operation "walk around", the time to set the control parameter of the motor 1 is specified as T1, and the time to set the control parameter of the motor 2 is specified as T2. Note that in the defined operation "lay down" in the drawing, in a case where it is desired to set an initial value of the control parameter in the controller of the actual machine, NULL is only required to be specified as the control parameter. The initial value of the control parameter is described at the beginning of the defined operation data file 1800.

As described above, according to the technology disclosed in the present specification, in the development environment of a control program for an autonomous operation device such as a robot, by providing a means of inputting and changing the control parameter of the motor, the characteristic value of the motor, and the hardware characteristic value of the actual machine, it is possible to correct and change the defined operation using a high-precision physics engine that reflects the hardware characteristics of the actual machine.

Furthermore, according to the technology disclosed in the present specification, when a control program (application program) is developed using a development tool program having a physics engine and a function of 3D graphics animation capable of reproducing a physical phenomenon close to a real environment, it is possible to record the hardware characteristic information such as the control parameter of the motor input or set for operating the control program on the development tool program and used, and install the recorded hardware characteristic information on the actual machine together with the control program. Therefore, on the actual machine, the motor controller can control the motor according to the control program using the control parameter whose operation has been checked in combination with the control program on the development tool program. As a result, it is possible to reproduce the expected action similar to the result on the development tool program on the actual machine. Furthermore, on the actual machine, it becomes possible to appropriately select and use a plurality of control programs whose operation has been checked in combination with the control parameter on the development tool program. Therefore, according to the technology disclosed in the present specification, it is possible to realize the development of a hardware characteristic that conforms to the defined operation invoked in the behavior plan at the same time as the development of the behavior plan program.

Furthermore, according to the technology disclosed in the present specification, by providing a development environment in which both the target value such as angle of each movable unit created using the key frame and hardware characteristics such as the control parameter of the motor can be input together, it is possible to perform program development of motor control, physical operation, and operation check by 3D graphics animation together. Therefore, there is an effect that the action of the real world by the created defined operation can be checked without using an actual machine. Therefore, according to the technology disclosed in the present specification, there is an effect that, by creating a simple control program such as defined operation in a single development environment while correcting the control parameter or the like in real time, and developing an application program on a development tool program including a physics engine and 3D graphics animation capable of reproducing a phenomenon close to the real environment, it is possible to perform operation check close to the operation of the actual machine without using the actual machine.

### INDUSTRIAL APPLICABILITY

The technology disclosed in the present specification has been described in detail with reference to specific embodiments. However, it is obvious that those skilled in the art can make modifications and substitutions of the embodiments without departing from the gist of the technology disclosed in the present specification.

The technology disclosed in the present specification may be used to evaluate and verify the operation of the application program that realizes autonomous or adaptive behavior of the autonomous operation device such as a robot, an autonomous vehicle, or an unmanned aerial vehicle (drone). Furthermore, the technology disclosed herein may also be applied to AI development of a video game character of which operation is controlled using a behavior plan.

In short, the technology disclosed in the present specification has been described in the form of exemplification, and the contents of the description of the present specification should not be interpreted restrictively. In order to determine the gist of the technology disclosed in the present specification, the scope of claims should be taken into consideration.

Note that the technology disclosed in the present specification may have the following configuration.
(1) An information processing apparatus that processes a control program including a target value for a movable unit of a control target device, the information processing apparatus including:
   a first holding unit that holds a control parameter of the movable unit according to a control method and a characteristic value of the movable unit;
   a control output unit that calculates an output value of the movable unit according to the target value using the control parameter and the characteristic value held by the first holding unit; and
   a physical operation unit that causes the control target device to perform a physical action according to the output value of the movable unit calculated.
(2) The information processing apparatus according to (1) described above,
   in which the control output unit calculates a control input value according to a deviation of the target value and a current value of the movable unit using the control parameter held by the first holding unit, and calculates an output value of the movable unit according to the characteristic value held by the first holding unit with respect to the control input value.
(3) The information processing apparatus according to any of (1) or (2) described above,
   in which the first holding unit holds at least one control parameter of a proportional gain, an integral gain, or a derivative gain according to the control method of the movable unit.
(4) The information processing apparatus according to any of (1) to (3) described above,
   in which the first holding unit holds at least one characteristic value of a manufacturer name of a motor that drives the movable unit, model number, mounting angle dimensions, type, shaft type, presence or absence of electromagnetic brake, driver type, rated output, rated rotational speed, maximum rotational speed, maximum input rotational speed, rated torque, instantaneous maximum torque, excitation maximum static torque, speed range, rotor inertia moment, inertia moment, resolution (motor shaft) (P/R), detector (encoder), backlash, reduction ratio, power input voltage, power input frequency, power input rated voltage, speed and position control command, maximum input pulse frequency, or motor unit mass.
(5) The information processing apparatus according to any of (1) to (4) described above, further including
   a second holding unit that holds a characteristic value of the control target device,
   in which the physical operation unit causes the control target device to execute a physical action using the characteristic value held by the second holding unit.
(6) The information processing apparatus according to (5) described above,
   in which the second holding unit holds at least one of weight, center of gravity, inertia, movable range of the joint, or friction coefficient of each component included in the control target device.
(7) The information processing apparatus according to any of (1) to (6) described above, further including
   a first acquisition unit that acquires the control parameter of the movable unit or the characteristic value of the movable unit held by the first holding unit.
(8) The information processing apparatus according to (7) described above,
   in which the first acquisition unit acquires the control parameter of the movable unit or the characteristic value of the movable unit from a setting file of the control program.
(9) The information processing apparatus according to any of (7) or (8) described above,
   in which the first acquisition unit acquires the control parameter of the movable unit in accordance with input operation by a user.
(10) The information processing apparatus according to any of (5) to (9) described above, further including
   a second acquisition unit that acquires the characteristic value of the control target device held by the second holding unit.
(11) The information processing apparatus according to (10) described above,
   in which the second acquisition unit acquires the characteristic value of the control target device from a file in which three dimensional model of the control target device is described.
(12) The information processing apparatus according to any of (1) to (11) described above, further including
   an editing unit that corrects or changes the control program in accordance with the input operation by the user.
(13) The information processing apparatus according to any of (1) to (12) described above, further including
   an output unit that outputs the control program that has undergone calculation of the physical action by the physical operation unit.
(14) The information processing apparatus according to (13) described above,
   in which the output unit outputs the control program incorporating at least part of information held in the first holding unit.
(15) The information processing apparatus according to (13) described above,
   in which the output unit outputs at least part of information held in the first holding unit in a file different from the control program.
(16) An information processing method for processing a control program including a target value for a movable unit of a control target device, the information processing method including:
   a first holding step of holding a control parameter of the movable unit according to a control method and a characteristic value of the movable unit;
   a control output step of calculating an output value of the movable unit according to the target value using the control parameter and the characteristic value held by the first holding step; and
   a physical operation step of causing the control target device to perform a physical action according to the output value of the movable unit calculated.
(17) A computer program described in a computer readable format so as to execute processing for a control program including a target value for a movable unit of a control target device on a computer, the computer program causing the computer to function as:
   a first holding unit that holds a control parameter of the movable unit according to a control method and a characteristic value of the movable unit;
   a control output unit that calculates an output value of the movable unit with respect to the target value using the control parameter and the characteristic value held by the first holding unit; and
   a physical operation unit that causes the control target device to perform a physical action according to the output value of the movable unit calculated.
(18) An information processing apparatus that performs processing for controlling a control target device having a movable unit according to a control program, the information processing apparatus including:
   a setting unit that sets a control parameter of the movable unit according to the control method, the control parameter being included in the control program, to a controller that drives the movable unit in the control target device; and
   an operation control unit that controls driving of the movable unit by the controller according to a target value of the movable unit specified by the control program.
(19) A program manufacturing method for manufacturing a control program for controlling a control target device having a movable unit, the program manufacturing method including:
   a control parameter setting step of setting to the control program a control parameter used to cause a controller of the control target device to control the movable unit; and
   a target value setting step of setting to the control program a target value to be input to a controller of the control target device to control driving of the movable unit.

### REFERENCE SIGNS LIST

- 100: Autonomous operation device (actual machine)
- 110: Main body unit
- 111: Processor
- 112: Memory
- 113: Communication modem
- 114: Battery
- 115: USB port
- 116: GPS
- 120: Module unit
- 121: Actuator
- 122: Processor
- 123: Memory
- 124: Sensor
- 125: Communication modem
- 200: Development device
- 210: Computer main body unit
- 211: Processor
- 212: GPU
- 213: Memory
- 214: USB port
- 215: Communication modem
- 220: Display
- 230: User interface
- 1200: Development device
- 1210: Motion editing unit
- 1220: Motor control output unit
- 1230: Physical operation unit

## Claims

1. An information processing apparatus that processes a control program including a target value for a movable unit of a control target device, the information processing apparatus comprising:
a first holding unit that holds a control parameter of the movable unit according to a control method and a characteristic value of the movable unit;
a control output unit that calculates an output value of the movable unit according to the target value using the control parameter and the characteristic value held by the first holding unit; and
a physical operation unit that causes the control target device to perform a physical action according to the output value of the movable unit calculated.

2. The information processing apparatus according to claim 1,
wherein the control output unit calculates a control input value according to a deviation of the target value and a current value of the movable unit using the control parameter held by the first holding unit, and calculates an output value of the movable unit according to the characteristic value held by the first holding unit with respect to the control input value.

3. The information processing apparatus according to claim 1,
wherein the first holding unit holds at least one control parameter of a proportional gain, an integral gain, or a derivative gain according to the control method of the movable unit.

4. The information processing apparatus according to claim 1,
wherein the first holding unit holds at least one characteristic value of a manufacturer name of a motor that drives the movable unit, model number, mounting angle dimensions, type, shaft type, presence or absence of electromagnetic brake, driver type, rated output, rated rotational speed, maximum rotational speed, maximum input rotational speed, rated torque, instantaneous maximum torque, excitation maximum static torque, speed range, rotor inertia moment, inertia moment, resolution (motor shaft) (P/R), detector (encoder), backlash, reduction ratio, power input voltage, power input frequency, power input rated voltage, speed and position control command, maximum input pulse frequency, or motor unit mass.

5. The information processing apparatus according to claim 1, further comprising
a second holding unit that holds a characteristic value of the control target device,
wherein the physical operation unit causes the control target device to execute a physical action using the characteristic value held by the second holding unit.

6. The information processing apparatus according to claim 5,
wherein the second holding unit holds at least one of weight, center of gravity, inertia, movable range of the joint, or friction coefficient of each component included in the control target device.

7. The information processing apparatus according to claim 1, further comprising
a first acquisition unit that acquires the control parameter of the movable unit or the characteristic value of the movable unit held by the first holding unit.

8. The information processing apparatus according to claim 7,
wherein the first acquisition unit acquires the control parameter of the movable unit or the characteristic value of the movable unit from a setting file of the control program.

9. The information processing apparatus according to claim 7,
wherein the first acquisition unit acquires the control parameter of the movable unit in accordance with input operation by a user.

10. The information processing apparatus according to claim 5, further comprising
a second acquisition unit that acquires the characteristic value of the control target device held by the second holding unit.

11. The information processing apparatus according to claim 10,
wherein the second acquisition unit acquires the characteristic value of the control target device from a file in which three dimensional model of the control target device is described.

12. The information processing apparatus according to claim 1, further comprising
an editing unit that corrects or changes the control program in accordance with input operation by a user.

13. The information processing apparatus according to claim 1, further comprising
an output unit that outputs the control program that has undergone calculation of the physical action by the physical operation unit.

14. The information processing apparatus according to claim 13,
wherein the output unit outputs the control program incorporating at least part of information held in the first holding unit.

15. The information processing apparatus according to claim 13,
wherein the output unit outputs at least part of information held in the first holding unit in a file different from the control program.

16. An information processing method for processing a control program including a target value for a movable unit of a control target device, the information processing method comprising:
a first holding step of holding a control parameter of the movable unit according to a control method and a characteristic value of the movable unit;
a control output step of calculating an output value of the movable unit according to the target value using the control parameter and the characteristic value held by the first holding step; and
a physical operation step of causing the control target device to perform a physical action according to the output value of the movable unit calculated.

17. A computer program described in a computer readable format so as to execute processing for a control program including a target value for a movable unit of a control target device on a computer, the computer program causing the computer to function as:
a first holding unit that holds a control parameter of the movable unit according to a control method and a characteristic value of the movable unit;
a control output unit that calculates an output value of the movable unit with respect to the target value using the control parameter and the characteristic value held by the first holding unit; and
a physical operation unit that causes the control target device to perform a physical action according to the output value of the movable unit calculated.

18. An information processing apparatus that performs processing for controlling a control target device having a movable unit according to a control program, the information processing apparatus comprising:
a setting unit that sets a control parameter of the movable unit according to a control method, the control parameter being included in the control program, to a controller that drives the movable unit in the control target device; and
an operation control unit that controls driving of the movable unit by the controller according to a target value of the movable unit specified by the control program.

19. A program manufacturing method for manufacturing a control program for controlling a control target device having a movable unit, the program manufacturing method comprising:
a control parameter setting step of setting to the control program a control parameter used to cause a controller of the control target device to control the movable unit; and
a target value setting step of setting to the control program a target value to be input to a controller of the control target device to control driving of the movable unit.
